# EUROPÄISCHE PATENTSCHRIFT

(11) **EP 2 316 308 B1**
(45) Veröffentlichungstag und Bekanntmachung des Hinweises auf die Patenterteilung: **29.08.2012**
(21) Anmeldenummer: 09174920.0
(22) Anmeldetag: 03.11.2009
(51) Int. Cl.: A47J 27/18

(54) **Vorrichtung und Verfahren zum diskontinuierlichen garenden Zubereiten von portionierten Nahrungsmittelstücken**
Device and method for discontinuous cooking preparation of portioned food items
Dispositif et procédé de préparation de cuisson discontinue de pièces d'aliments en portions

(43) Veröffentlichungstag der Anmeldung: 04.05.2011
(73) Patentinhaber: Spaghettissimo International AG, 9496 Balzers (LI)
(72) Erfinder: Foser, Bruno, 9496 Balzers (LI)
(74) Vertreter: Harmann, Bernd-Günther

(56) Entgegenhaltungen:
- EP-B1- 0 729 312
- IT-B- 1 207 735
- US-A- 4 543 878

## Beschreibung

Die Erfindung betrifft eine Vorrichtung zum diskontinuierlichen garenden Zubereiten von portionierten Nahrungsmittelstücken, insbesondere Teigwaren, Nudeln, Reis, Gemüse, Fleisch- und Fischstücken, nach dem Oberbegriff des Anspruchs 1 sowie ein entsprechendes Verfahren nach dem Oberbegriff des Anspruchs 14.

Eine derartige Vorrichtung und ein derartiges Verfahren werden insbesondere in der EP 0 729 312 beschrieben.

Vorrichtungen zum diskontinuierlichen Zubereiten von portionierten Nahrungsmittelstücken, insbesondere Teigwaren, sind in vielerlei Ausführungen aus dem Stand der Technik bekannt. Sie dienen dazu, eine portionierte Menge roher Nahrungsmittelstücke in möglichst kurzer Zeit zuzubereiten und finden vor allem Anwendung in Form von Automaten.

In der EP 0 729 312 und in der EP 0 952 781 wird eine Vorrichtung zum diskontinuierlichen Zubereiten von portionierten Teigwaren, insbesondere Spaghetti, mit einem Vorratsbehälter zur Aufnahme der Rohteigwaren, einer Kochkammer und einer Entwässerungskammer beschrieben, wobei die Kochkammer und die Entwässerungskammer jeweils in ihrem Einlassbereich und Auslassbereich durch Ventile verschliessbar sind. Als Ventil im Auslassbereich der Entwässerungskammer ist bei dieser Vorrichtung eine quer zur Einlass- bzw. Auslassrichtung linear verfahrbare Schliessklappe vorgesehen, wobei im Auslassbereich der Kochkammer und im Einlassbereich der Entwässerungskammer ein Ventil angeordnet ist. Nachdem die vorgegebene Menge von oberhalb der Kochkammer befindliche Teigwaren mittels einer Portioniervorrichtung in die in ihrem Auslassbereich verschlossene Kochkammer eingefüllt worden ist, wird die in ihrem unteren Bereich bereits verschlossene Kochkammer mit Hilfe einer linear verfahrbaren Schliessklappe verschlossen. Von einer Frischwasserzufuhr wird über eine Leitung und ein geöffnetes Absperrventil Frischwasser in einen Vorratsbehälter eingelassen. Von dort gelangt das Wasser über eine Leitung mittels einer Pumpe in die Heizkammer, welche die Kochkammer ringspaltartig umgibt. In der Zwischenwandung zwischen Kochkammer und Heizkammer ist ein Heizelement in Form von Heizstäben angeordnet. Bevor der eigentliche Heizvorgang beginnt, wird die gesamte Heizkammer mit Wasser gefüllt und darüber hinaus eine vorgegebene Menge Wasser über eine Füllleitung in die Kochkammer eingefüllt. Nachdem nun der gewünschte Füllstand innerhalb der Kochkammer erreicht ist, wird ein Absperrventil in der Füllleitung verschlossen, so dass die Kochkammer thermisch verschlossen ist. In ihrem Auslassbereich dient dazu eine Schließklappe. Der nach dem eigentlichen Kochvorgang in der Kochkammer herrschende Überdruck wird mittels einer Druckentlastungsleitung, die einerseits über ein Absperrventil mit einer Abwasserleitung, welche in einer Abwasserabfuhr endet, und andererseits über ein Absperrventil und eine Leitung mit der Entwässerungskammer verbunden ist, durch Öffnen des Absperrventils abgebaut. Nunmehr befinden sich Kochkammer und Entwässerungskammer auf etwa gleichem Druckniveau. Nach dem Schliessen des Absperrventils kann die Schliessklappe geöffnet werden, und die gekochten Teigwaren fallen mit dem restlichen Kochwasser in die Entwässerungskammer. Ein im Bodenbereich der Entwässerungskammer vorgesehenes Sieb bildet den Durchlass zu einer Leitung. Eine Abwasserpumpe sorgt für die Entwässerung der in der Entwässerungskammer vorhandenen Teigwaren. Dabei bewirkt das Sieb, dass die Teigwaren die Entwässerungskammer nicht verlassen. Gleichzeitig wird der in der Entwässerungskammer noch vorhandene Überdruck abgebaut. Aus der Entwässerungskammer gelangt heisser Dampf durch eine Vorwärmleitung in den Vorratsbehälter und wärmt dort das später durch die Heizstäbe aufzuheizende Frischwasser zusätzlich geringfügig auf. Die Vorwärmleitung endet in der Abwasserabfuhr. Nachdem die Teigwaren vom Kochwasser getrennt worden sind, lässt sich die fertig zubereitete Portion Teigwaren mittels der linear verschiebbaren Schliessklappe auf einen unterhalb der Entwässerungskammer befindlichen Teller oder dergleichen ausgeben.

Die beschriebenen Vorrichtung und das beschriebene Verfahren kommen seit langem in der Praxis insbesondere für die Zubereitung von Spaghetti und Makkaroni erfolgreich zur Anwendung. Das Zubereitungsintervall pro Nudelportion beträgt bei der bekannten Vorrichtung im betriebsbereiten Zustand etwa 120 bis über 150 Sekunden, wobei die Erhitzung der Nudeln im Wasser in der Kochkammer etwa 90 bis 120 Sekunden und die Befüllung der leeren Kochkammer mit den Nudeln, das Entleeren der Kochkammer, das Entwässern der gekochten Nudeln, das Spülen der Vorrichtung sowie das Öffnen und Schliessen der Ventile etwa 30 Sekunden benötigt. Um ein möglichst rasches Erhitzen des Wassers in der Heizkammer und der Kochkammer zu ermöglichen, kommt ein Hochleistungsheizelement mit einer Leistungsaufnahme von ca. 6000 Watt zum Einsatz, das einen Starkstromanschluss mit 360 Volt und eine Absicherung von 20 bis 32 Ampere erfordert.

Ziel ist es, diese Zubereitungszeit weiter zu reduzieren. Dies ist insbesondere zu Stoßzeiten, beispielsweise zu Beginn der Mittagspause, wünschenswert, wenn eine größere Anzahl an Nudelportionen innerhalb einer möglichst kurzen Zeit zubereitet werden soll. Dies wäre durch Einsatz eines noch leistungsstärkeren Heizelements unter Umständen möglich. Der Einsatz eines noch leistungsstärkeren Heizelements zur Erzielung einer noch kürzeren Aufheizzeit würde die Spitzenleistungsaufnahme jedoch weiter erhöhen.

Der Einsatz eines Heizelements mit einer noch höheren Leistung ist aufgrund der vorhandenen Infrastruktur teilweise gar nicht möglich. Vielerorts steht kein Starkstromanschluss zur Verfügung, so dass der Einsatz von Heizelementen mit einer noch größeren Leistungsaufnahme grundsätzlich ausscheidet. Ein weiteres Ziel besteht in der Reduzierung der Spitzenleistungsaufnahme der Vorrichtung auf unter 3500 Watt, so dass ein Betrieb der Vorrichtung an einem konventionellen Hausstromanschluss, insbesondere an einer normalen, mit maximal 16 Ampere abgesicherten 230 Volt Steckdose, möglich ist.

Zur Ermöglichung einer schnellen Zubereitung der Nudeln ist die Bereitstellung einer größeren Menge an heissem Wasser in der Heizkammer anscheinend erforderlich, so dass die Aufheizzeit des Wassers bei Bestellung einer Nudelportion reduziert wird oder gar kein Aufheizen des Wassers mehr erforderlich ist, da das Wasser bereits die Solltemperatur hat. Die Bereitstellung einer größeren Menge an Heisswasser in der Heizkammer führt jedoch wiederum zu einem höheren Standby-Verbrauch, sogar wenn gar keine Nudelzubereitung erfolgt. Die Leistungsaufnahme im betriebsbereiten Standby-Zustand sollte hingegen reduziert werden. Ausserdem führt die Erhöhung der Menge des bereitzustellenden heissen Wassers auch dazu, dass die Aufheizzeit beim Einschalten des kalten Geräts erhöht wird.

In der US 4,543,878 (Luchetti) wird eine automatische Kochvorrichtung mit einem Wassererhitzer, einer Kochkammer, einem Nahrungsmitteleinlass in die Kochkammer und einer Separierungskammer beschrieben. Die Separierungskammer ist unterhalb der Kochkammer angeordnet und einem Auslass der Kochkammer nachgeschaltet, so dass gekochte Nahrungsmittel nach Beendigung des Kochprozesses in die Separierungskammer fallen können. Die Kochkammer, der mit ihr verbundene Wassererhitzer und die Separierungskammer bilden eine zusammenhängende Einheit. Die Separierungskammer ist mit einem Wärmetauscher verbunden, welchem das aus der Separierungskammer abgeführte heisse Abwasser zugeführt ist. Der Wärmetauscher weist einen zu einem Abwasserablass führenden Überlauf auf, so dass sich stets eine bestimmte Menge an Abwasser, welche aus der Separierungskammer abgeführt worden ist, im Wärmetauscher befindet. Diese sich stets im Wärmetauscher befindliche konstante Menge an Abwasser kann, sofern sie eine ausreichende Temperatur erreicht hat, dazu dienen, das der Kochkammer zugeführte Frischwasser vorzuwärmen. Hierzu ist dem Wärmetauscher Frischwasser zugeführt, so dass durch den Wärmetauscher geführtes Frischwasser vorgewärmt und von dort in die Kochkammer geleitet werden kann. Ein Nachteil dieser Kochvorrichtung besteht darin, dass die Temperatur der konstanten Menge an Abwasser und somit die Wirkung des Wärmetauschers wesentlich von der Einsatzhäufigkeit und den Zubereitungsintervallen abhängt. Durch den Überlauf des Wärmetauschers, welche die bestimmte Menge an Abwasser im Wärmetauscher konstant hält, wird bei Zufuhr von heissem Abwasser aus der Separierungskammer zum abgekühlten Abwasser im Wärmetauscher und durch deren Vermischung stets auch ein Teil des warmen Abwassers abgeführt, so dass die Wirkung des Wärmetauschers vor allem bei den ersten Zubereitungsvorgängen sowie grossen Zubereitungsintervallen gering ist.

Die Forderungen nach einer kürzeren Zubereitungszeit, insbesondere zur Stoßzeit, einer geringeren Spitzenleistungsaufnahme und einer reduzierten Standby-Leistungsaufnahme bilden somit einen Zielkonflikt, der bisher nicht hinreichend gelöst werden konnte.

Aufgabe der Erfindung ist es daher, eine Vorrichtung und ein Verfahren zum diskontinuierlichen garenden Zubereiten von portionierten Nahrungsmittelstücken, insbesondere Teigwaren, Nudeln, Reis, Gemüse, Fleisch- und Fischstücken, zur Verfügung zu stellen, die sich durch einen verkürzten Zubereitungsintervall bei einem reduzierten Energieverbrauch, insbesondere einer reduzierten Spitzenleistungsaufnahme, auszeichnen.

Diese Aufgabe wird durch die Verwirklichung der Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung beruht auf dem Grundgedanken, die durch die Zubereitung der Portion an Nahrungsmittelstücken aufgewendete thermische Energie zu einem großen Teil zurück zu gewinnen und für die Zubereitung der nächsten Portion zu nutzen. Der größte Anteil des Energieverbrauchs der Maschine wird durch die Erwärmung des kalten Frischwassers hervorgerufen. Ein wesentlicher Teil dieser thermischen Energie wird nach der Zubereitung der Portion an Nahrungsmittelstücken und dem Entwässern der gegarten Nahrungsmittelstücke bisher in Form von heißem Abwasser oder Dampf in die Kanalisation oder in Form von Dampf in die Umgebung abgeführt. Abhängig von der Art der Nahrungsmittelstücke wird nur ein verhältnismäßig geringer Anteil von unter 20% des Wassers beim Garen von den Nahrungsmittelstücken aufgenommen. Der für die Zubereitung einer Portion an Nahrungsmittelstücken benötigte überschüssige Wasseranteil wird bisher ungenutzt abgeführt. Das Abwasser und der abgeführte Dampf weisen eine wesentlich höhere Temperatur als das zugeführte Frischwasser auf. Versuche haben gezeigt, dass die Temperatur des Abwassers im Falle einer kochenden Zubereitung der Nahrungsmittelstücke etwa 85 bis 100 Grad Celsius beträgt, während das aus der Frischwasserleitung bezogene Frischwasser Temperaturen von 10 bis 25 Grad Celsius aufweist.

Die Erfindung beruht auf dem Konzept der Herstellung eines thermodynamischen Gleichgewichts zwischen dem Wasser, welches der Vorrichtung bzw. dem Verfahren zugeführt wird, und dem Abwasser und dem Dampf, welche der Vorrichtung bzw. dem Verfahren abgeführt werden. Die Temperaturdifferenz zwischen Frischwasser und Abwasser, die bis über 80 Grad betragen kann, wird genutzt, indem das bei der Zubereitung anfallende Abwasser und der anfallenden Dampf möglichst vollständig aufgefangen werden und ein Wärmeaustausch zwischen dem aufgefangene heißen Abwasser und Dampf und dem Frischwasser, das für die Zubereitung der nächsten Portionen bereitgestellt wird, bewirkt wird. Diese Energierückgewinnung führt dazu, dass vor allem bei regelmäßigem Betrieb und der sequentiellen zeitnahen Entnahme einer größeren Anzahl an Portionen wesentlich weniger Energie in das System eingebracht werden muss und somit der Energieverbrauch für den Betrieb der Vorrichtung und die Durchführung des Verfahrens erheblich reduziert werden kann. Die Gesamtenergiebilanz bei Betrieb der erfindungsgemässen Vorrichtung über einen längeren Zeitraum ist wesentlich besser als im Falle der bekannten Vorrichtungen, bei welchen gar keine oder nur einen geringe Nutzung der thermischen Energie des Abwassers oder des ausgestoßenen Dampfs erfolgt. Da vor allem in Stoßzeiten, in welchen innerhalb einer relativ kurzer Zeit eine größere Menge an Portionen zuzubereiten ist, auch kontinuierlich eine größere Menge an heißem Abwasser anfällt und der Anteil der rückgewinnbaren thermischen Energie aufgrund kurzer Abkühlzeiten steigt, wird die Aufheizzeit wesentlich reduziert und es kann sogar ein wesentlich kleiner dimensioniertes Heizelement zur Erwärmung des bereits vorgewärmten Frischwassers zum Einsatz kommen. Somit kann auf ein Hochleistungs-Heizelement verzichtet werden, wodurch die maximale Leistungsaufnahme des Geräts auf deutlich unter 3500 Watt sinkt und ein Betrieb am normalen Hausstromnetz möglich ist.

Versuche haben gezeigt, dass durch die erfindungsgemäße Wärmerückgewinnung ein turboladerartiger Effekt eintritt, da mit steigender Zahl der hintereinander bezogenen Portionen auch die Frischwassertemperatur steigt, wodurch sowohl die Aufheizzeit, als auch die für die Zubereitung einer Portion benötigte elektrische Energie sinkt. Durch die kürzer werdenden Zubereitungsintervalle steigt die Frischwassertemperatur bis zu einem Grenzwert.

Die Erfindung umfasst eine Vorrichtung zum diskontinuierlichen garenden Zubereiten von portionierten Nahrungsmittelstücken. Unter Nahrungsmittelstücken sind allgemein Nahrungsmittel in Stückform zu verstehen, die mittels garender Zubereitung in Wasser, Wasserdampf, einer wässrigen Lösung oder einer sonstigen Flüssigkeit, insbesondere einer Brühe, einer Sauce, einem Saft oder einem Fett vorzugsweise zum darauf folgenden zeitnahen Verzehr zubereitet werden. Die Zubereitung erfolgt mit Flüssigkeitsüberschuss, wobei ein Teil der Flüssigkeit nach dem Kochvorgang, insbesondere in Form von überschüssigem Kochwasser, abgeführt wird und nicht dem Verzehr dient. Geeignete Nahrungsmittelstücke sind insbesondere Teigwaren, wie Nudeln in Form von Spaghetti, Makkaroni oder Tortellini, wie Gnocchi oder Spätzle, Reis, kochbares Gemüse oder kochbare Früchte sowie Fleischstücke, wozu auch stückiges Geflügelfleisch zählt, oder Fischstücke. Die Größe der Stücke kann variierten.

Unter einer garenden Zubereitung ist allgemein eine feuchte Gartechnik für die Zubereitung von Nahrungsmitteln durch Wärmezufuhr unter Zuhilfenahme von Flüssigkeit, insbesondere Wasser zu verstehen. Unter Garen ist sowohl das Kochen oder Sieden, also das Garen in Wasser im Bereich des Siedepunkts, das Garziehen oder Niedertemperaturgaren, also das Garen in Wasser bei einer Temperatur deutlich unter dem Siedepunkt, das Druckgaren, also das Kochen oder Dämpfen bei Überdruck und somit bei einem im Vergleich zum Atmosphärendruck erhöhten Siedepunkt, sowie das Dämpfen oder Dünsten, also das Garen im Dampf, zu verstehen.

Unter Wasser, insbesondere unter Frischwasser, ist im Rahmen der Erfindung nicht nur reines Wasser zu verstehen, sondern auch angereichertes oder aromatisiertes Wasser sowie wässrige Lösungen, insbesondere auch Brühen, Fonds, Saucen, Säfte oder Fette.

Die erfindungsgemäße Vorrichtung umfasst einen Vorratsbehälter zur Aufnahme der rohen, zu garenden Nahrungsmittelstücke. Die im Vorratsbehälter gelagerten Nahrungsmittelstücke können vollkommen roh und ungegart und ohne nennenswerten Wasseranteil sein. Es ist aber auch möglich, vorgegarte und/oder wasserhaltige Nahrungsmittelstücke zu verwenden. Dies kann insbesondere zur Konservierung der Nahrungsmittelstücke und/oder zur Verkürzung der Zubereitungszeit vorteilhaft sein. Unter rohen Nahrungsmittelstücken sind daher im Rahmen der Erfindung allgemein die der Vorrichtung und dem Verfahren zugeführenden Nahrungsmittelstücke zu verstehen, die gegart oder weitergegart werden sollen.

Dem Vorratsbehälter ist eine Portioniervorrichtung zur Entnahme einer bestimmten oder bestimmbaren Portion an rohen Nahrungsmittelstücken aus dem Vorratsbehälter zugeordnet. Unter einer Portion ist allgemein eine definierte Menge an Nahrungsmittelstücken zu verstehen, insbesondere eine definierte Teilmenge der im Vorratsbehälter gelagerten Gesamtmenge. Bei der definierten Menge kann es sich beispielsweise um einen Volumen-, Stück- oder Gewichtsbereich handeln. Die Portion kann eine fixe oder eine variable Menge umfassen. Zum Beispiel ist eine Portion eine Menge an Nahrungsmittelstücken, die in einem Behältnis einer bestimmten, festen oder variablen Größe Platz findet.

Die Vorrichtung weist eine Kochkammer zum Garen der mittels der Portioniervorrichtung aus dem Vorratsbehälter entnommenen Portion an rohen Nahrungsmittelstücken auf. Die druckfest verschließbare und vorzugsweise zur Aufnahme eines Überdrucks insbesondere von über 1 Bar ausgelegte Kochkammer, welche insbesondere eine röhrenförmige, beispielsweise zylindrische oder konische, sich im Wesentlichen vertikal erstreckende Grundform besitzt, hat einen oberen Kochkammereinlass, der mittels eines ersten Verschlusses, insbesondere einem ersten Ventil, schliessbar ist. Über den oberen Kochkammereinlass am oberen Ende der Kochkammer kann die Kochkammer mit der Portion an rohen Nahrungsmittelstücken beschickt werden. In anderen Worten ist die Portioniervorrichtung derart angeordnet, dass die Portion an rohen Nahrungsmittelstücken vom Vorratsbehälter über den oberen Kochkammereinlass in die Kochkammer gebracht werden kann. Am unteren Ende der Kochkammer befindet sich ein unterer Kochkammerauslass, der mittels eines zweiten Verschlusses, insbesondere einem zweiten Ventil, schliessbar ist. Dieser untere Kochkammerauslass dient zur Ausgabe der Portion an gegarten Nahrungsmittelstücken. Der Heizkammer ist mindestens eine Heizeinheit zugeordnet, mittels welcher der Inhalt der Kochkammer zum Garen erhitzt werden kann.

Unterhalb der Kochkammer befindet sich eine Entwässerungskammer. Durch Öffnen des am unteren Ende der Kochkammer befindlichen zweiten Verschlusses kann die Kochkammer über den Kochkammerauslass mit der Entwässerungskammer verbunden werden, so dass die in der Kochkammer gegarte Portion an Nahrungsmittelstücken in die Entwässerungskammer fallen kann, wenn der zweite Verschluss geöffnet wird. In anderen Worten sind die Kochkammer und die Entwässerungskammer über den verschliessbaren Kochkammerauslass miteinander verbindbar. Die Entwässerungskammer dient zur Entwässerung der Portion an gegarten Nahrungsmittelstücken, wobei die gegarten Nahrungsmittelstücke von überschüssigem heißen Wasser, das zum Garen in der Kochkammer verwendet wurde, durch Abtropfen getrennt werden kann. Dieses überschüssige Wasser wird im Folgenden als Abwasser bezeichnet.

In der Entwässerungskammer ist bodenseitig ein Abwasserauslass angeordnet. Der Abwasserauslass wird beispielsweise von einer Öffnung am Boden der Entwässerungskammer oder einem am Boden der Entwässerungskammer endenden Rohr oder einem Schlauch gebildet. Dieser Abwasserauslass ist vorzugsweise, abhängig von der Geometrie der gegarten Nahrungsmittelstücke, mit einem Sieb versehen, so dass lediglich das überschüssige heiße Abwasser, nicht jedoch ein wesentlicher Teil der gegarten Nahrungsmittelstücke durch den Abwasserauslass aus der Entwässerungskammer abgeführt werden. Die Entwässerungskammer weist beispielsweise eine zylindrische, kegelstumpfartige oder kugelige Form auf, insbesondere mit einem größeren Querschnitt als derjenige der Kochkammer, so dass das überschüssige heiße Abwasser von den Nahrungsmittelstücke gut abtropfen und durch den Abwasserauslass abgeführt werden kann. Insbesondere bilden die Kochkammer und die Entwässerungskammer bei geöffnetem zweitem Verschluss und bei Geschlossenstellung der restlichen Verschlüsse und Ventile einen gemeinsamen Druckraum.

Unten an der Entwässerungskammer ist ein unterer Entwässerungskammerauslass ausgeformt, der mittels eines dritten Verschlusses, insbesondere einem dritten Ventil, schliessbar ist. Der Entwässerungskammerauslass dient zur Ausgabe der Portion an gegarten und entwässerten Nahrungsmittelstücken, nachdem das Abwasser abgeführt worden ist. Über den geöffneten Entwässerungskammerauslass können die gegarten und entwässerten Nahrungsmittelstücke beispielsweise auf einen Teller, in einen Becher oder auf ein Förderband fallen.

Bei der beschriebenen Vorrichtung erfolgt der Transfer der Nahrungsmittelstücke von der Kochkammer in die Entwässerungskammer und von dort zur Ausgabe hauptsächlich über die Schwerkraft. Alternativ besteht jedoch auch die Möglichkeit, die Nahrungsmittelstücke aktiv zu befördern, beispielsweise mittels eines Förderbandes, einem Schieber oder durch Über- oder Unterdruck.

Der erste Verschluss des oberen Kochkammereinlasses und der dritte Verschluss des unteren Entwässerungskammerauslasses können in einer möglichen Ausführungsform von Schließklappen gebildet werden, die mit einem Abstand zur jeweiligen, die jeweilige Öffnung der Kammer enthaltenden Kammerwand linear bewegbar sind, so dass die Schließklappen zum Verschließen am Ende der Linearbewegung insbesondere mittels eines Hebelgetriebes senkrecht auf die Öffnungsebene der jeweiligen Kammer gepresst werden. Der zweite Verschluss am unteren Kochkammerauslass zwischen der Kochkammer und der Entwässerungskammer ist beispielsweise als schwenkbare Schließklappe ausgebildet, die mittels eines Linearantriebes und eines Hebelgetriebes, insbesondere mittels eines Kniehebelgetriebes, verschlossen und verriegelt wird. Die Pressung erfolgt insbesondere mittels eines Hebelgetriebes, so dass die Antriebsleistung sowohl für die Linearbewegung als auch für die Hebelbewegung äußerst gering dimensioniert werden kann. Damit ergibt sich eine sehr günstige Bauhöhe der Ventile der Vorrichtung, so dass die Gesamthöhe der Vorrichtung so gering ausfällt, dass eine bequeme Handhabbarkeit der mit den Vorrichtungen ausgerüsteten Automaten ermöglicht wird. Die Verwendung eines Hebelgetriebes, insbesondere eines Kniehebelgetriebes, kann vorteilhaft sein, da ein relativ schwach dimensionierter Antriebsmotor eingesetzt werden kann und die in der Kochkammer beim Kochvorgang auftretenden hohen Drücke von einigen Bar aufgrund der Hebelkonstruktion nicht auf den Motor wirken. Ein derartiger Verschluss ist aus dem Stand der Technik bekannt und wird beispielsweise in der EP 0 729 312 beschrieben. Alternativ besteht jedoch auch die Möglichkeit, andere Verschlusstypen für den ersten, zweiten oder dritten Verschluss zu verwenden, beispielsweise Schieberventile, Klappenventile, Kugelventile, Pendelventile, Transferventile oder sonstige geeignete Ventile oder Verschlüsse.

Ausserdem besitzt die Vorrichtung eine Heizkammer zum Vorheizen von Frischwasser. Der Heizkammer ist mindestens eine Heizeinheit zugeordnet, so dass das Frischwasser in der Heizkammer vorgewärmt werden kann. Diese Heizkammer kann gesondert und getrennt von der Kochkammer angeordnet sein, wobei die Heizkammer und die Kochkammer jeweils mindestens eine eigene Heizeinheit aufweisen. Alternativ sind die Heizkammer und die Kochkammer miteinander verbunden und teilen sind insbesondere mindestens eine gemeinsame Heizeinheit. In einer möglichen Ausführungsform der Erfindung ist die Heizkammer rings um die Kochkammer angeordnet. In der Trennwand zwischen der Heizkammer und der Kochkammer befindet sich mindestens eine Heizeinheit zum Heizen des Inhalts der Kochkammer und des Inhalts der Heizkammer. In anderen Worten umgibt die Heizkammer die Kochkammer ringspaltartig, wobei in der Zwischenwandung zwischen Kochkammer und Heizkammer die Heizeinheit insbesondere in Form von Heizstäben angeordnet ist. Die Heizkammer ist vorzugsweise druckfest verschlossen, so dass ein Überdruck in der Heizkammer, insbesondere von über 1 Bar, entstehen kann. Unter der Heizkammer ist funktional eine Kammer zum Vorheizen des Wassers, das zum Garen in der Kochkammer verwendet werden soll, zu verstehen. Es ist möglich, dass die Heizkammer von der Kochkammer gebildet wird, so dass die Kochkammer auch gleichzeitig die Heizkammer ist. Die Erfindung umfasst daher auch eine Ausführungsform, bei welcher Kochkammer und Heizkammer eine gemeinsame Kochkammer bilden.

Die erfindungsgemässe Vorrichtung besitzt einen Frischwassertank zur Aufnahme von Frischwasser. Dieser Frischwassertank ist vorzugsweise mit der Frischwasserversorgung zur Nachfüllung des Frischwassertanks verbunden oder er dient als nachfüllbarer Wasserspeicher. Der Frischwassertank ist derart dimensioniert, dass mindestens die Menge an Frischwasser im Frischwassertank aufnehmbar ist, die für die Zubereitung einer Portion an Nahrungsmittelstücken benötigt wird.

Der Frischwassertank ist mit der Heizkammer zur deren Befüllung mit Frischwasser verbunden. Diese Verbindung erfolgt beispielsweise über eine Leitung insbesondere unter Zuhilfenahme einer schaltbaren Frischwasserpumpe und/oder eines Ventils. Alternativ wird das Frischwasser über die Schwerkraft und/oder durch den Wasserdruck aus der Leitung der Frischwasserversorgung vom Frischwassertank in die Heizkammer gedrückt.

Die Heizkammer ist wiederum zur Befüllung mit vorgeheiztem Frischwasser mit der Kochkammer verbunden. Diese Verbindung erfolgt beispielsweise über mindestens eine Leitung und/oder eine Bohrung in der Wandung zwischen der Heizkammer und der Kochkammer, wobei die Verbindung insbesondere mittels eines Ventils schließbar ist. Das Befüllen der Kochkammer mit dem vorgeheizten Frischwasser aus der Heizkammer kann zum Beispiel durch Überdruck in der druckfest verschlossenen Heizkammer und/oder eine Pumpe und/oder über die Schwerkraft erfolgen.

Erfindungsgemäss weist die Vorrichtung einen Abwassertank auf. Dieser Abwassertank ist mit dem Abwasserauslass der Entwässerungskammer verbunden und ist zur Aufnahme des heißen Abwassers aus der Entwässerungskammer ausgebildet. In anderen Worten wird das heiße Abwasser aus der Entwässerungskammer vorzugsweise vollständig im Abwassertank aufgefangen.

Das Volumen des Abwassertanks ist derart dimensioniert, dass mindestens das bei der Zubereitung einer Portion an Nahrungsmittelstücken anfallende Abwasser aus der Entwässerungskammer im Abwassertank aufgenommen werden kann. Die bei der Zubereitung einer Portion an Nahrungsmittelstücken anfallende Menge an Abwasser ist etwas geringer als die für die Zubereitung einer Portion an Nahrungsmittelstücken benötigte Menge an Frischwasser, da die gegarten Nahrungsmittelstücke einen Teil des Wassers bei der Zubereitung in der Kochkammer aufnehmen, und außerdem beim Entwässern in der Entwässerungskammer ein Teil des Wassers an den Nahrungsmittelstücken haften bleibt und mit den gegarten und entwässerten Nahrungsmittelstücken ausgegeben wird.

Erfindungsgemäss grenzen der Abwassertank und der Frischwassertank derart aneinander, dass das Frischwasser im Frischwassertank durch das heiße Abwasser im Abwassertank vorgewärmt wird. In anderen Worten sind der Frischwassertank und der Abwassertank derart miteinander thermisch verbunden, dass ein Wärmeaustausch zwischen dem aus der Entwässerungskammer kommenden heißen Abwasser im Abwassertank und dem kühleren Frischwasser im Frischwassertank stattfindet und das wärmere Abwasser das kältere Frischwasser erhitzt, so dass nach einer bestimmten Zeit ein thermodynamisches Gleichgewicht zwischen dem Abwasser im Abwassertank und dem Frischwasser im Frischwassertank durch einen entsprechenden Temperaturausgleich entsteht. Diese Energierückgewinnung führt dazu, dass das Frischwasser aus dem Frischwassertank bereits vorgewärmt in die Heizkammer befördert werden kann und somit weniger Energie zum Aufheizen des Wassers in der Heizkammer auf die vorgegebene Solltemperatur erforderlich ist. Vor allem bei regelmäßigem Betrieb und der sequentiellen zeitnahen Entnahme einer größeren Anzahl an Portionen muss somit wesentlich weniger Energie in das System eingebracht werden. Der Energieverbrauch für den Betrieb der Vorrichtung und die Durchführung des Verfahrens kann erheblich reduziert werden.

Damit mindestens das für die Zubereitung einer Portion erforderliche Frischwasser im Frischwassertank durch das heiße Abwasser vorgewärmt werden kann, entspricht das Volumen des Frischwassertanks vorzugsweise mindestens dem Volumen an Frischwasser, das für die Zubereitung mindestens einer Portion an Nahrungsmittelstücken ausreicht. Vorzugsweise ist das Volumen des Abwassertanks größer als das Volumen des Frischwassertanks, wobei insbesondere das Volumen der Heizkammer größer ist als das Volumen der Kochkammer. Mittels dieser Volumenverhältnisse kann eine sehr effiziente Energierückgewinnung erfolgen. Alternativ besteht jedoch auch die Möglichkeit, andere Volumenverhältnisse zu wählen.

Um den Wärmeaustausch zwischen dem heißen Abwasser und dem kühleren Frischwasser zu ermöglichen, ist es vorteilhaft, wenn der Abwassertank und der Frischwassertank unmittelbar aneinandergrenzen und vorzugsweise nur durch eine gemeinsame Trennwand getrennt sind, so dass Abwasser und Frischwasser unmittelbar benachbart sind. Vorzugsweise umschliesst der Abwassertank den Frischwassertank zumindest in einer Ebene, oder umgekehrt. Beispielsweise ist der Abwassertank rings um den Frischwassertank angeordnet, oder umgekehrt. Es hat sich als vorteilhaft erwiesen, wenn der Frischwassertank im Abwassertank angeordnet ist. Der Frischwassertank wird hierbei vom Abwassertank im Wesentlichen vollständig umschlossen ist. Alternativ ist eine umgekehrte Anordnung möglich. Ausserdem besteht gemäss der Erfindung die Möglichkeit, den Abwassertank und den Frischwassertank derart miteinander zu verschachteln oder zu verschränken, dass in einem gemeinsamen Tank zwei Bereiche vorgesehen sind, die funktional den Abwassertank und den Frischwassertank bilden, wobei eine möglichst große Grenzfläche zwischen diesen beiden Bereichen hergestellt wird. Dies ist beispielsweise mittels eines Tanks möglich, der im Inneren eine bienenwabenartige Struktur aufweist, wobei die einzelnen hexagonalen Segmente abwechselnd miteinander verbunden sind und somit abwechselnd heißeres Abwasser und kälteres Frischwasser enthalten.

In einer Weiterbildung der Erfindung ist im Frischwassertank ein Frischwasser-Heizelement, beispielsweise eine tauchsiederartigen Heizwendel, zum zusätzlichen Vorwärmen des Frischwassers vorgesehen. Diese zusätzliche Vorwärmung des Frischwassers im Frischwassertank ist vor allem dann von Vorteil, wenn die Menge an heißem Abwasser im Abwassertank oder die Temperatur des Abwassers im Abwassertank nicht zum ausreichenden Vorwärmen des Frischwassers im Frischwassertank ausreicht oder die Vorrichtung gerade in Betrieb genommen wurde.

In einer Weiterbildung der Erfindung ist ein Abwasser-Füllstandmesser zum Erfassen der Abwassermenge im Abwassertank vorgesehen, der mit einem schaltbaren Abwassertankauslass, insbesondere einer Abwasserpumpe, zum schaltbaren Auslassen des Abwassers aus dem Abwassertank in Verbindung steht. Bei dem Abwasser-Füllstandmesser kann es sich um einen Schwimmerschalter handeln, der ab Erreichen eines Füllstand-Grenzwerts das vollständige oder teilweise Auslassen des Abwassers aus dem Abwassertank bewirkt. Alternativ handelt es sich um einen Sensor, mittels welchem das Niveau im Abwassertank bestimmbar ist. Ausserdem ist einen Frischwasser-Füllstandmesser zum Erfassen der Frischwassermenge im Frischwassertank angeordnet. Dieser Frischwasser-Füllstandmesser steht mit einem Frischwassertankeinlass, insbesondere ein Frischwasserventil, derart in Wirkverbindung, dass das Frischwasser schaltbar in den Frischwassertank eingelassen werden kann. Beispielsweise handelt es sich bei dem Frischwasser-Füllstandmesser um einen Schwimmerschalter, der ab Erreichen eines Mindestniveaus das Befüllen des Frischwassertanks mit Frischwasser bis zu einem bestimmten Grenzwert bewirkt. Alternativ handelt es sich bei dem Frischwasser-Füllstandmesser um einen Sensor, mittels welchem das Niveau im Frischwassertank bestimmbar ist. In einer Weiterbildung sind der Abwasser-Füllstandmesser, der Abwassertankauslass, der Frischwasser-Füllstandmesser und der Frischwassertankeinlass derart miteinander verschaltet sind, insbesondere über eine elektronische Steuerung, dass die Frischwassermenge im Frischwassertank abhängig ist von der Abwassermenge im Abwassertank. So ist es insbesondere möglich, dass das Füllstandniveau des Frischwassers im Frischwassertank und das Füllstandniveau des Abwassers im Abwassertank auf im Wesentlichen gleichem Niveau gehalten werden, so dass das Abwasser und das Frischwasser jeweils in gleicher Füllhöhe aneinander grenzen. Herrscht in den beiden Tanks ein wesentlich unterschiedliches Niveau, beispielsweise weil im Abwassertank wesentlich mehr Abwasser gespeichert ist als im Frischwassertank, besteht beispielsweise die Gefahr, dass an der Grenzfläche zwischen dem Abwassertank und dem Frischwassertank ein großer Teil der Wärme des heißen Abwassers an die Luft im Frischwassertank abgegeben wird. In dieser Situation ist es sinnvoll, den Frischwassertank derart zu füllen, dass das heiße Abwasser im Abwassertank vollständig vom Frischwasser umgeben wird. In anderen Worten ist es von Vorteil, wenn die Steuerung derart ausgebildet ist, dass das Niveau des Frischwassers im Frischwassertank mindestens dem Niveau des Abwassers im Abwassertank entspricht.

Eine weitere Weiterbildung der Erfindung sieht vor, dass im Abwassertank ein Abwasser-Temperaturmesser zum Erfassen der Abwassertemperatur des Abwassers vorgesehen ist. Der Abwassertank weist einen schaltbaren Abwassertankauslass, insbesondere eine Abwasserpumpe, zum schaltbaren Auslassen des Abwassers aus dem Abwassertank auf. Zum Erfassen der Frischwassermenge im Frischwassertank ist ein Frischwasser-Füllstandmesser vorgesehen. Der Frischwassertank weist einen Frischwassertankeinlass, insbesondere ein Frischwasserventil, zum schaltbaren Einlassen von Frischwasser in den Frischwassertank auf. Der Abwasser-Temperaturmesser, der Abwassertankauslass, der Frischwasser-Füllstandmesser und der Frischwassertankeinlass sind derart miteinander verschaltet, insbesondere über eine elektronische Steuerung, dass die Frischwassermenge im Frischwassertank abhängig ist von der Abwassertemperatur im Abwassertank. Diese Weiterbildung der Erfindung ist ausserdem mit der vorangegangenen Weiterbildung der Erfindung kombinierbar. Ausserdem ist es möglich, zusätzlich oder alternativ zur Frischwasserniveauerfassung durch den Frischwasser-Füllstandmesser die Frischwassertemperatur im Frischwassertank mittels eines Frischwasser-Temperaturmesser zu erfassen. Somit ist es möglich, die thermische Energie des Abwassers und insbesondere auch die thermische Energie des Frischwassers im jeweiligen Tank durch Erfassen der Menge und der Temperatur zu bestimmen und die Füllniveaus derart zu steuern, dass ein optimierter Wärmeaustausch stattfinden kann. So ist es beispielsweise sinnvoll, den Abwassertank vollständig zu entleeren, wenn die Temperatur des Abwassers auf gleiches Niveau wie die Temperatur im Frischwassertank oder sogar darunter gesunken ist. Ausserdem ist es für gewisse Anwendungen sinnvoll, die Füllniveaus gezielt zur Erzeilung einer kurzen Vorwärmzeit zu steuern, indem beispielsweise der Frischwassertank gezielt auf niedrigem Füllniveau gehalten wird, so dass die geringe Menge an Frischwasser eine höhere Vorwärmtemperatur annimmt, womit die Aufheizzeit reduziert werden kann. Hierzu ist es vorteilhaft, dass die Frischwassermenge im Frischwassertank mit steigender Abwassermenge und/oder mit steigender Abwassertemperatur steigt.

In einer Weiterbildung der Erfindung ist im Frischwassertank ein Frischwasser-Heizelement zum Vorwärmen des Frischwassers angeordnet ist, wobei das Frischwasser-Heizelement und der Abwassertankauslass derart verschaltet sind, dass bei eingeschaltetem Frischwasser-Heizelement die Abwassermenge im Abwassertank reduziert ist, insbesondere im Wesentlichen kein Abwasser im Abwassertank ist. Hiermit wird bewirkt, dass das Frischwasser-Heizelement primär das Frischwasser aufheizt, nicht jedoch das an den Frischwassertank angrenzende Abwasser im Abwassertank. Das Frischwasser-Heizelement wird vorzugsweise dann aktiviert, wenn das Abwasser im Abwassertank nicht wesentlich wärmer ist als das Frischwasser im Frischwassertank und wenn die Temperatur des Frischwassers im Frischwassertank einen bestimmten Grenzwert unterschritten hat. Hierzu sind der Abwasser-Temperaturmesser, der Frischwasser-Temperaturmesser, der Abwassertankauslass und das Frischwasser-Heizelement derart verschaltet, dass das Frischwasser-Heizelement bei Unterschreiten einer Temperatur des Frischwassers im Frischwassertank und/oder bei Unterschreiten einer Temperatur des Abwassers im Abwassertank eingeschaltet wird und das Abwasser aus dem Abwassertank bei eingeschaltetem Frischwasser-Heizelement mittels des Abwassertankauslasses ausgelassen wird.

In einer weiteren Ausbildungsform der Erfindung weist die Entwässerungskammer insbesondere in einem oberen Abschnitt einen Entwässerungskammer-Druckauslass auf. Ein allfälliger Druck in der Entwässerungskammer, insbesondere in Form von Dampf, kann somit vor Öffnen des dritten Verschlusses des Entwässerungskammerauslasses ausgelassen werden. Der Entwässerungskammer-Druckauslass ist insbesondere über ein Ventil mit dem Abwassertank und/oder der Abwasserleitung verbunden. In der Entwässerungskammer vorhandener Druck insbesondere in Form von Dampf gelang somit in den Abwassertank und erwärmt diesen, so dass auch das Frischwasser im Frischwassertank erwärmt wird.

Ausserdem oder alternativ besitzt die Heizkammer einen Heizkammer-Druckauslass, der insbesondere über ein Ventil mit dem Abwassertank und/oder der Abwasserleitung verbunden ist, so dass Druck, insbesondere in Form von Dampf, aus der Heizkammer in den Abwassertank gelassen werden kann. Vorzugsweise ist das Ventil mit einem den Druck in der Heizkammer erfassenden Drucksensor derart verschaltet, dass der Druck in der Heizkammer begrenzt, insbesondere geregelt wird.

Ebenfalls zusätzlich oder alternativ besitzt die Kochkammer einen Kochkammer-Druckauslass, der insbesondere über ein Ventil mit dem Abwassertank und/oder der Abwasserleitung verbunden ist. Mittels des Kochkammer-Druckauslasses kann der Druck insbesondere in Form von Dampf aus der Kochkammer in den Abwassertank abgelassen werden. Das Ventil ist mit einem den Druck in der Kochkammer erfassenden Drucksensor in einer Weiterbildung derart verschaltet, dass der Druck in der Kochkammer begrenzt, insbesondere geregelt wird.

Indem nicht nur das heiße Abwasser, das bei Betrieb der Vorrichtung anfällt, sondern auch jeglicher Dampf und Überdruck im Abwassertank aufgenommen wird, lässt sich eine größtmögliche Rückgewinnung der in Form von Wasser und Wasserdampf entweichenden thermischen Energie bewirken.

Der Abwassertank kann entweder belüftet sein, so dass ein Druckausgleich mit der Umgebung insbesondere über einen Filter stattfindet, oder er kann als gasdicht verschlossener Tank ausgebildet sein, wobei der Überdruck im Abwassertank begrenzt, insbesondere geregelt wird und über den Abwasserauslass und/oder einen zusätzlichen Druckauslass abgelassen wird. Damit der Druck nicht von dem Abwassertank in die Entwässerungskammer, die Kochkammer oder die Heizkammer zurückgeführt wird, ist der Einsatz von Rückschlagventilen und von Pumpen, insbesondere zwischen der Entwässerungskammer und dem Abwassertank, möglich.

Der Frischwassertank kann als offener, belüfteter Tank ausgebildet sein. Alternativ besteht die Möglichkeit, dass der Frischwassertank ein druckdichter Tank ist. Dies hat insbesondere den Vorteil, dass der Druck der Frischwasserversorgung genutzt werden kann, um das Frischwasser vom Frischwassertank in die Heizkammer zu drücken.

Eine Weiterbildung der Erfindung sieht vor, dass eine Wasserauffangschale unterhalb der Kochkammer, der Heizkammer, der Entwässerungskammer, dem Frischwassertank und dem Abwassertank angeordnet ist. Zum Erfassen einer Wassermenge in der Wasserauffangschale ist ein Wasserauffangschalen-Füllstandmesser vorgesehen. In der Zufuhr des Frischwassers zum Frischwassertank befindet sich ein Haupt-Ventil. Der Wasserauffangschalen-Füllstandmesser und das Haupt-Ventil sind derart ausgebildet und verschaltet, dass bei Überschreiten eines Grenzwerts der Wassermenge in der Wasserauffangschale die Zufuhr des Frischwassers abgeschaltet wird. Beispielsweise ist der Wasserauffangschalen-Füllstandmesser als Schwimmerschalter und das Haupt-Ventil als ein mit dem Wasserauffangschalen-Füllstandmesser elektrisch verbundenes Magnetventil ausgebildet. Mittels dieser Anordnung ist es möglich, die Zufuhr des Frischwassers im Falle einer Leckage in einer Komponente abzuschalten, um ein ungewolltes Austreten von Wasser und einen damit allfällig verbundenen Wasserschaden zu verhindern.

In einer weiteren Ausführungsform ist in der Entwässerungskammer eine Abschreckdüse zum Abschrecken der in der Entwässerungskammer befindlichen Portion an gegarten und gegebenenfalls entwässerten Nahrungsmittelstücken mit Frischwasser angeordnet. Dies ist insbesondere bei der Zubereitung von Nudeln vorteilhaft, um die gekochten Nudeln mit kaltem Frischwasser abschrecken zu können. Die Abschreckdüse ist beispielsweise eine Sprühdüse. Die Abschreckdüse ist über ein Abschreckdüsen-Ventil mit der Frischwasserzufuhr, die dem Frischwassertank vorangeschaltet ist, verbunden, so dass nicht vorgewärmtes Frischwasser zum Abschrecken verwendet wird.

Im Folgenden wird allgemein das erfindungsgemässe Verfahren zum diskontinuierlichen garenden Zubereiten von portionierten Nahrungsmittelstücken, insbesondere Teigwaren, Nudeln, Reis, Gemüse, Fleisch- und Fischstücken, insbesondere unter Verwendung der soeben beschriebenen erfindungsgemäßen Vorrichtung zusammenfassend erläutert.

Der Frischwassertank wird mit einer Menge an Frischwasser, die für die Zubereitung mindestens einer Portion an Nahrungsmittelstücken ausreicht, durch Aktivieren des schaltbaren Frischwassertankeinlasses befüllt. Darauf folgend wird die Heizkammer, die insbesondere rings um die Kochkammer angeordnet ist, mit dem Frischwasser aus dem Frischwassertank befüllt. Insbesondere wird im Anschluss, abhängig von der verbliebenen Menge an Frischwasser im Frischwassertank, selbiger durch Aktivieren des schaltbaren Frischwassertankeinlasses nachgefüllt. Die Heizkammer wird zum Erwärmen des darin befindlichen Frischwassers beheizt. Vorzugsweise werden die Temperatur und/oder der Druck in der Heizkammer begrenzt oder geregelt. Durch Erzeugung einen Überdrucks, beispielsweise von bis zu 5 Bar, ist es möglich, die Wassertemperatur auf weit über 100 Grad Celsius zu regeln. Zum Heizen ist beispielsweise die Heizeinheit vorgesehen, die in einer Trennwand zwischen der Heizkammer und der Kochkammer angeordnet ist. In einem darauf folgenden Schritt wird eine Portion an rohen Nahrungsmittelstücken aus dem Vorratsbehälter mittels einer Portioniervorrichtung entnommen. Die Kochkammer wird mit der Portion an rohen Nahrungsmittelstücken über den geöffneten ersten Verschlusses des oberen Kochkammereinlasses der Kochkammer mittels der Portioniervorrichtung beschickt, wobei der untere Kochkammerauslass mittels des zweiten Verschlusses geschlossen ist. Nach Beschicken der Kochkammer mit der Portion an rohen Nahrungsmittelstücken wird der erste Verschluss des oberen Kochkammereinlasses verschlossen. Die vorzugsweise gasdicht verschlossene Kochkammer wird mit vorgeheiztem Frischwasser aus der Heizkammer befüllt. Die Portion an rohen Nahrungsmittelstücken befindet sich nun zum Garen im vorgeheizten Frischwasser. In einem darauf folgenden Schritt wird gewartet, bis die Portion an rohen Nahrungsmittelstücken in der Kochkammer gegart ist, wobei vorzugsweise kontinuierlich oder zeitlich unterbrochen mittels der Heizeinheit oder einer anderen Heizeinheit Wärme zugeführt wird. Vorzugsweise werden die Temperatur und/oder der Druck in der Kochkammer begrenzt oder geregelt, beispielsweise auf einen Druck von bis zu 2 Bar. In einem optionalen Schritt wird während oder nach dem Garen der Druck zwischen der Kochkammer und der Entwässerungskammer ausgeglichen. Nach Beendigung des Garvorgangs wird der zweite Verschlusses geöffnet, wobei die Portion an gegarten Nahrungsmittelstücken von der Kochkammer durch den unteren Kochkammerauslass in die Entwässerungskammer, die unterhalb der Kochkammer angeordnet ist, fällt, wobei der untere Entwässerungskammerauslass mittels des dritten Verschlusses geschlossen ist. In einem nächsten Schritt wird die Portion an gegarten Nahrungsmittelstücken durch Abführen von heißem Abwasser aus der Entwässerungskammer entwässert, indem das überschüssige Wasser in der Entwässerungskammer von den gegarten Nahrungsmittelstücken abtropft und aus der Entwässerungskammer abgeführt wird. Das Abwasser hat eine Temperatur von bis zu 100 Grad, abhängig von der Temperatur und dem Druck in der Kochkammer. Optional werden in einem weiteren Schritt vor, während oder nach dem Entwässern und Abführen des Abwassers die gegarten und entwässerten Nahrungsmittelstücke in der Entwässerungskammer durch Einführen von Frischwasser in die Entwässerungskammer, insbesondere durch Besprühen mittels einer Düse, und Abführen des Abwassers aus der Entwässerungskammer abgeschreckt. Im Anschluss wird die Portion an gegarten und entwässerten und gegebenenfalls abgeschreckten Nahrungsmittelstücken durch Öffnen des dritten Verschlusses ausgegeben, wobei die Portion an gegarten und entwässerten und gegebenenfalls abgeschreckten Nahrungsmittelstücken durch den unteren Entwässerungskammerauslass insbesondere auf einen Teller, in einen Becher oder auf ein Förderband fällt. Erfindungsgemäss wird das heiße Abwasser aus der Entwässerungskammer in den Abwassertank geführt, wobei das Volumen des Abwassertanks derart dimensioniert ist, dass mindestens das bei der Zubereitung einer Portion an Nahrungsmittelstücken anfallende Abwasser aus der Entwässerungskammer im Abwassertank aufgenommen wird. Das Frischwasser im Frischwassertank wird durch das Abwasser im Abwassertank, der an den Frischwassertank angrenzt, und insbesondere durch ein Frischwasser-Heizelement vorgewärmt. In einer Weiterbildung wird die Frischwassermenge im Frischwassertank abhängig von der Abwassermenge und/oder der Abwassertemperatur im Abwassertank geregelt oder gesteuert. In einer Weiterbildung wird die Frischwassermenge im Frischwassertank mit steigender

Abwassermenge und/oder mit steigender Abwassertemperatur erhöht. In einer weiteren Weiterbildung wird in der Entwässerungskammer und/oder in der Kochkammer und/oder in der Heizkammer herrschender Druck in den Abwassertank abgelassen. Die Reihenfolge der beschriebenen Schritte kann variieren. So ist es beispielsweise möglich, in einem ersten Schritt die Kochkammer mit der Portion an rohen Nahrungsmittelstücken zu füllen und erst im Anschluss das Frischwasser zu erwärmen. Weitere Variationen sind, soweit logisch und sinnvoll, möglich.

Die erfindungsgemässe Vorrichtung und das erfindungsgemässe Verfahren werden nachfolgend anhand eines in einer Zeichnung schematisch dargestellten konkreten Ausführungsbeispiel rein beispielhaft näher beschrieben, wobei auch auf weitere Vorteile der Erfindung eingegangen wird.

Im Einzelnen zeigt:

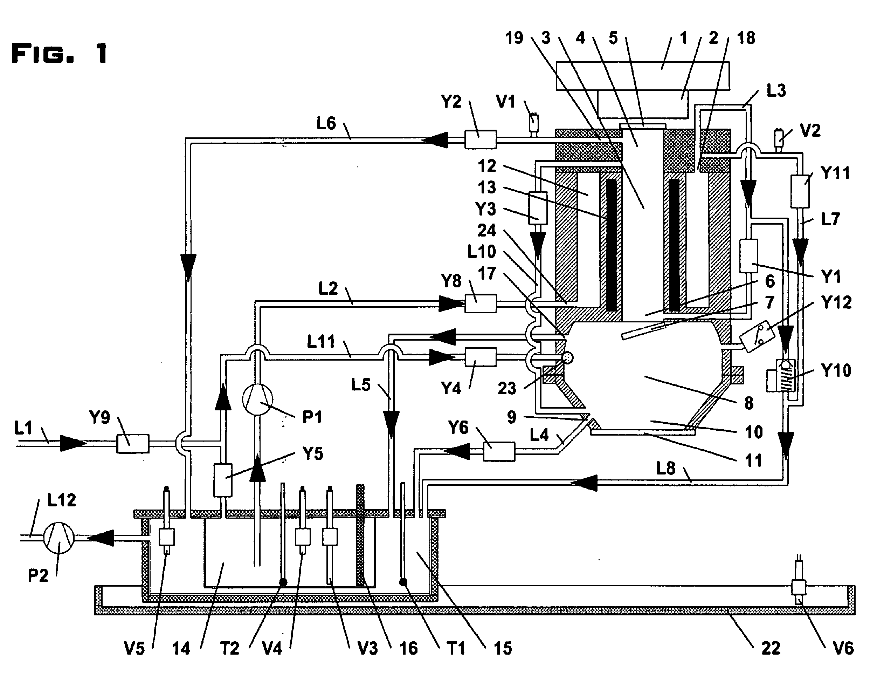

- Fig. 1: die Funktionsweise der erfindungsgemässen Vorrichtung in schematischer Darstellung.

Die Figur 1 zeigt ein Ausführungsbeispiel der erfindungsgemässen Vorrichtung in schematischer, nicht massstabsgetreuer Darstellung. Im Folgenden werden die Vorrichtung und das Verfahren anhand dieser schematischen Darstellung des konkreten Ausführungsbeispiels beschrieben.

Die Vorrichtung zum diskontinuierlichen garenden Zubereiten von portionierten Nahrungsmittelstücken, insbesondere Teigwaren, Nudeln, Reis, Gemüse, Fleisch- und Fischstücken, setzt sich im Wesentlichen aus einem Vorratsbehälter 1, einer Portioniervorrichtung 2, einer Kochkammer 3, einer Entwässerungskammer 8, einer Heizkammer 12, einem Frischwassertank 14 und einem Abwassertank 15 zusammen. Im Vorratsbehälter 1 befinden sich die rohen, zu garenden Nahrungsmittelstücke. Mittels der Portioniervorrichtung 2 kann eine Portion an rohen Nahrungsmittelstücken aus dem Vorratsbehälter 1 entnommen und über einen oberen Kochkammereinlass 4 in die Kochkammer 3 zum Garen der Portion an rohen Nahrungsmittelstücken gegeben werden. Der runde Kochkammereinlass 4 kann mittels eines ersten Verschlusses 5, der von einer linear bewegbaren Schließklappe gebildet wird, verschlossen werden. Die Kochkammer 3 hat einen zylindrischen Querschnitt und erstreckt sich vertikal. Unten an der Kochkammer 3 befindet sich ein runder unterer Kochkammerauslass 6, der mittels eines zweiten Verschlusses 7, nämlich einer schwenkbaren Schließklappe, schliessbar ist, so dass die Portion an gegarten Nahrungsmittelstücken von der Kochkammer 3 in die Entwässerungskammer 8 ausgegeben werden kann. Unterhalb der Kochkammer 3 ist die Entwässerungskammer 8 angeordnet, die zur Entwässerung der Portion an gegarten Nahrungsmittelstücken dient. Die Kochkammer 3 und die Entwässerungskammer 8 sind über den verschliessbaren Kochkammerauslass 6 miteinander schließbar verbunden. Bodenseitig ist in der Entwässerungskammer 8 ein Abwasserauslass 9 zum Abführen von heißem Abwasser aus der Entwässerungskammer 8 angeordnet. Der Boden der Entwässerungskammer 8 wird von einem dritten Verschluss 11 gebildet, der als linear verschiebbare Schließklappe ausgebildet ist. Mittels dieses Verschlusses 11 kann ein unterer Entwässerungskammerauslass 10 verschlossen werden. Durch Öffnen des dritten Verschlusses 11 kann die Portion an gegarten und entwässerten Nahrungsmittelstück ausgegeben werden. Die Heizkammer 12 ist ringspaltartig rings um die Kochkammer 3 angeordnet. In der Trennwand zwischen der Heizkammer 12 und der Kochkammer 3 ist eine Heizeinheit 13 eingegossen, mittels welcher sowohl die Kochkammer 3 als auch die Heizkammer 12 beheizt werden kann. Die Heizkammer 12, die Kochkammer 3 und die Heizeinheit 13 bilden ein gemeinsames Gussteil.

Hiervon beabstandet ist der Frischwassertank 14 zur Aufnahme von Frischwasser, das von einer Frischwasserleitung L1 zugeführt wird, angeordnet. Der Frischwassertank 14 ist in dem Abwassertank 15 angeordnet und wird sowohl ringsum, also in der horizontalen Ebene, als auch bodenseitig von dem Abwassertank 15 umgeben. Somit grenzen der Abwassertank 15 und der Frischwassertank 14 derart aneinander, dass das Frischwasser im Frischwassertank 14 durch heißes Abwasser im Abwassertank 15 vorgewärmt werden kann. Der Frischwassertank 14 ist über eine Frischwasserpumpe P1 mit der Heizkammer 12 verbunden, so dass die Heizkammer 12 mit Frischwasser befüllt werden kann. Die Heizkammer 12 ist wiederum mit der Kochkammer 3 verbunden, so dass die Kochkammer 3 mit vorgeheiztem Frischwasser aus der Heizkammer 12 befüllt werden kann. Der Abwasserauslass 9 der Entwässerungskammer 8 führt in den Abwassertank 15, so dass heißes Abwasser aus der Entwässerungskammer 8 im Abwassertank 15 aufgenommen werden kann. Das Volumen des Frischwassertanks 14 entspricht mindestens dem Volumen an Frischwasser, das für die Zubereitung mindestens einer Portion an Nahrungsmittelstücken benötigt wird. Das Volumen des Abwassertanks 15 ist derart dimensioniert, dass mindestens das bei der Zubereitung einer Portion an Nahrungsmittelstücken anfallende Abwasser aus der Entwässerungskammer 8 aufnehmbar ist. Außerdem ist das Volumen des Abwassertanks 15 größer als das Volumen des Frischwassertanks 14. Das Volumen der Heizkammer 12 ist wiederum größer ist als das Volumen der Kochkammer 3.

Das Zusammenwirken der genannten Komponenten sowie die weiteren Merkmale werden anhand der Zubereitung einer Portion an Nahrungsmittelstücken im Folgenden beschrieben:
Der Frischwassertank 14 wird über die Frischwasserleitung L1 mit Frischwasser durch Öffnen eines schaltbaren Frischwasserventils Y5 befüllt. Das Haupt-Ventil Y9 in der Frischwasserleitung L1 ist zumindest während des Befüllens des Frischwassertanks 14 sowie während des Abschreckens geöffnet und aus Sicherheitsgründen vorzugsweise im Normalzustand geschlossen. Das Befüllen des Frischwassertanks 14 erfolgt über den Wasserdruck aus der Frischwasserleitung L1. Während des Befüllens wird das Füllstandniveau im Frischwassertank 14 mittels des Frischwasser-Füllstandmessers V3 erfasst. Bei Erreichen eines Sollniveaus des Frischwassers im Frischwassertank 14 wird die Befüllung über ein Signal des Frischwasser-Füllstandmessers V3 durch Schliessen des Frischwasserventils Y5 gestoppt.

Im Anschluss wird die Heizkammer 12 mit dem Frischwasser aus dem Frischwassertank 14 befüllt, indem die Frischwasserpumpe P1 das Frischwasser aus dem Frischwassertank 14 über die Leitung L2 und das geöffnete Ventil Y8 durch den Frischwassereinlass 24 in die Heizkammer 12 pumpt.

Das Frischwasser in der Heizkammer 12 wird durch Aktivieren der Heizeinheit 13 vorgewärmt. Der Druck in der Heizkammer 12 wird von dem Drucksensor V2 der Heizkammer 12 am oberen Heizkammer-Druckauslass 18 überwacht. Der Drucksensor V2 ist beispielsweise auf 5 Bar eingestellt. Sobald dieser Druck in der Heizkammer 12 überschritten wird, öffnet sich das Ventil Y11 in der Leitung L7 und der überschüssige Druck und Dampf entweicht aus der Heizkammer 12 durch die Leitungen L7 und L8 in den Abwassertank 15 und erwärmt diesen. Um unnötiges Entweichen von heißem Dampf aus der Heizkammer 12 in den Abwassertank 15 zu vermeiden, wird die Heizeinheit 13 vorzugsweise derart gesteuert oder temperaturgeregelt, dass der Druck in der Heizkammer 12 unter normalen Umständen den Grenzdruck des Drucksensors V2 nicht überschreitet. Sobald eine Mindesttemperatur, die insbesondere über einen nicht dargestellten Temperatursensor geregelt wird, in der Heizkammer 12 erreicht ist, befindet sich die Vorrichtung im betriebsbereiten Zustand.

Sobald eine Portion angefordert wird, wird eine Portion an rohen Nahrungsmittelstücken aus dem Vorratsbehälter 1 mittels der Portioniervorrichtung 2 entnommen. Die Kochkammer 3 wird mit dieser Portion an rohen Nahrungsmittelstücken über den geöffneten ersten Verschluss 5 des oberen Kochkammereinlasses 4 mittels der Portioniervorrichtung 2 beschickt. Währenddessen ist der untere Kochkammerauslass 6 verschlossen, indem sich der zweite Verschluss 7 in Geschlossenstellung steht. Die Portion an rohen Nahrungsmittelstücken befindet sich nun in der trockenen Kochkammer 3. Der erste Verschluss 5 des oberen Kochkammereinlasses 4 wird dicht verschlossen. Es herrscht noch Atmosphärendruck in der Kochkammer 3.

Im Anschluss wird das Ventil Y1 in der Leitung L3, welche den oberen Bereich der Heizkammer 12 mit dem unteren Bereich der Kochkammer 3 verbindet, geöffnet, während gleichzeitig die Pumpe P1 zum Nachfüllen der Heizkammer 12 mit Frischwasser aus dem Frischwassertank 14 über die Leitung L2 aktiviert wird. Das unter Druck stehende heiße Frischwasser aus dem oberen Bereich der Heizkammer 12 entweicht aus der Heizkammer 12 in den unteren Bereich der Kochkammer 3, in welcher ein wesentlich geringerer Druck herrscht als in der Heizkammer 12. Die Portion an rohen Nahrungsmittelstücken wird mit dem heißen Wasser geflutet. Sobald der Füllstand des heißen Frischwassers in der Kochkammer 3 ein bestimmtes Niveau erreicht hat, beispielsweise nach Ablauf einer bestimmten Zeit, wird das Ventil Y1 wieder geschlossen. Es hat sich als vorteilhaft erwiesen, das vorgewärmte Frischwasser aus dem oberen Bereich der Heizkammer 12 zu entnehmen und das Frischwasser dem unteren Bereich der Heizkammer 12 zuzuführen, um eine Temperaturschichtung des bevorrateten Wassers in der Heizkammer 12 zu erzielen und möglichst heißes Wasser von der Heizkammer 12 in die Kochkammer 3 zu befördern.

Es folgt der Garvorgang, währenddessen die Portion an Nahrungsmittelstücken in der Kochkammer 3 im heißen Wasser gegart wird. Um das Wasser auf der Solltemperatur zu halten oder auf die Solltemperatur zu bringen, wird der Kochkammer 3 während des Garvorgangs Wärme mittels der Heizeinheit 13 zugeführt. Da die Heizeinheit 13 auch auf die Heizkammer 12 wirkt, erhitzt sie zeitgleich zusätzlich das durch die Frischwasserzufuhr abgekühlte Wasser in der Heizkammer 12 auf die Solltemperatur. Der Druck in der Kochkammer 3 wird während des Garvorgangs von dem Drucksensor V1 überwacht, wobei der Druck zum Beispiel auf einen Maximaldruck, beispielsweise 2 Bar, begrenzt oder geregelt wird, indem Druck über den Kochkammer-Druckauslass 19 und die Leitung L6 durch Öffnen des Ventils Y2 in den Abwassertank 15 abgelassen wird und/oder die Heizeinheit 13 deaktiviert oder die Heizleistung gemindert wird. Durch Ablassen von Druck und heißem Dampf in den Abwassertank 15 über die Leitung L6 wird der Abwassertank weiter aufgeheizt. Aus Sicherheitsgründen ist in der Leitung L3, welche die Heizkammer 12 und die Kochkammer 3 verbindet, am Auslass der Heizkammer 12 ein Sicherheitsventil Y10 vorgesehen, das im Falle des Erreichen eines übermäßigen Grenzdrucks, beispielsweise von 9 Bar, den Druck aus der Heizkammer 12 über die Leitung L8 in den Abwassertank 15 entweichen lässt.

Während des Garvorgangs oder am Ende des Garvorgangs werden die Drücke in der Kochkammer 3 und in der Entwässerungskammer 8 angeglichen, indem ein Ventil Y3, das in einer die Kochkammer 3 und die Entwässerungskammer 8 verbindenden Leitung L10 geöffnet wird und der Überdruck von der Kochkammer 3 in die Entwässerungskammer 8 entweicht. Es herrscht Druckgleiche zwischen diesen beiden Kammern 3 und 8.

Jetzt wird der zweite Verschlusses 7 geöffnet, so dass die Portion an gegarten Nahrungsmittelstücken mitsamt dem heißen Wasser aus der Kochkammer 3 durch den unteren Kochkammerauslass 6 in die Entwässerungskammer 8 fällt. Währenddessen ist der untere Entwässerungskammerauslass 10 mittels des dritten Verschlusses 11 verschlossen.

Die Portion an gegarten Nahrungsmittelstücken wir nun von dem überschüssigen Wasser, insbesondere dem Kochwasser, befreit, indem das heiße Abwasser aus der Entwässerungskammer 8 abgeführt wird. Hierzu weist die Entwässerungskammer 8 am Boden den Abwasserauslass 9 zum Abführen des heißen Abwassers aus der Entwässerungskammer 8 auf. Der Abwasserauslass 9 führt über die Leitung L4 und das Ventil Y6 in den Abwassertank 15, so dass durch Öffnen des Ventils Y6 das gesamte heiße Abwasser von der Entwässerungskammer 8 in den Abwassertank 15 läuft. Ein allfälliger Überdruck oder Dampf in der Entwässerungskammer 8 entweicht über den Entwässerungskammer-Druckauslass 17 und die Leitung L5 ebenfalls in den Abwassertank 15 und wärmt diesen im Inneren auf. In der Leitung L5 kann alternativ ein Ventil angeordnet sein, um den Druckausgleich zwischen der Entwässerungskammer 8 und dem Abwassertank 15 gezielt zu steuern. Ist kein Ventil in der Leitung L5 vorhanden, entweicht bei Herstellen der Druckgleiche zwischen der Kochkammer 3 und der Entwässerungskammer 8 über die Leitung L10 auch der Überdruck in der Entwässerungskammer 8 zeitnah in den Abwassertank 15. Nach Ablassen des Abwassers durch die Leitung L4 und des Überdrucks ebenfalls durch die Leitung L4 und auch durch die Leitung L5 herrscht Atmosphärendruck in der Entwässerungskammer 8, da es sich bei dem Abwassertank 15 um einen entlüfteten Abwassertank 15 handelt, in welchem kein Überdruck herrscht. Das bis zu 100 Grad Celsius heiße Abwasser im Abwassertank 15 verbleibt dort zunächst und umgibt das kühlere Frischwasser im Frischwassertank 14. Da der Abwassertank 15 und der Frischwassertank 14 derart aneinander angrenzen, dass ein thermischer Ausgleich zwischen dem Inhalt des Frischwassertanks 14 und dem Inhalt des Abwassertanks 15 stattfindet, wird das Frischwasser im Frischwassertank 14 durch das heiße Abwasser im Abwassertank 15 aufgeheizt, bis das Frischwasser und das Abwasser im Wesentlichen die gleiche Temperatur haben.

Während sich die Nahrungsmittelstücke in der Entwässerungskammer befinden, vor dem Abführen, während des Abführens oder nach dem Abführen des Abwassers, wird in einem weiteren Schritt die Portion an gegarten und entwässerten oder zu entwässernden Nahrungsmittelstücken durch Besprühen der Nahrungsmittelstücke mit kaltem Wasser angeschreckt. Hierzu ist in einem oberen Abschnitt der Entwässerungskammer 8 eine Abschreckdüse 23 angeordnet, mittels welcher das kalte Frischwasser auf die Nahrungsmittelstücke gleichmässig verteilt wird. Die Abschreckdüse 23 ist über die Leitung L11 und das Abschreckdüsen-Ventil Y4 mit der Frischwasserleitung L1 verbunden, so dass unvorgewärmtes Frischwasser bei Öffnen des Abschreckdüsen-Ventil Y4 auf die Nahrungsmittelstücke gespritzt wird. Dieses Wasser wird durch die heißen Nahrungsmittelstücke ebenfalls erhitzt und fließt durch den Abwasserauslass 9 und die Leitung L4 in den Abwassertank 15. Nun kann die Portion an gegarten, entwässerten und abgeschreckten Nahrungsmittelstücken durch Öffnen des dritten Verschlusses 11 des unteren Entwässerungskammerauslass 10 ausgegeben werden, indem die Portion auf einen unterhalb des Entwässerungskammerauslasses 10 angeordneten Teller oder einen Becher (nicht dargestellt) fällt. Durch das Fallen der Nahrungsmittelstücke durch den Entwässerungskammerauslass 10 entsteht kurzzeitig eventuell ein Unterdruck in der Entwässerungskammer 8. Damit die Nahrungsmittelstücke trotzdem ungehindert aus der Entwässerungskammer fallen können, ist ein Ventil Y12 in einem oben Abschnitt der Entwässerungskammer 8 vorgesehen, das einen Lufteinlass bildet.

Das heiße Abwasser in Abwassertank 15 heizt währenddessen das Frischwasser im Frischwassertank 14 auf. Die Abwassertemperatur wird mittels eines Abwasser-Temperaturmessers T1 gemessen. Ausserdem wird die Frischwassertemperatur über den Frischwasser-Temperaturmesser T2 erfasst. Somit kann der Zeitpunkt, zu welchem sich die Temperaturen im Wesentlichen angeglichen haben, identifiziert werden. Ist dies der Fall oder hat das mittels des Abwasser-Füllstandmessers V5 erfasste Niveau des Abwassers im Abwassertank 15 eine bestimmte Füllhöhe erreicht, wird die Abwasserpumpe P2, welche den Abwassertankauslass bildet, aktiviert, wodurch das abgekühlte Abwasser über die Abwasserleitung L12 entweicht und insbesondere der Kanalisation zugeführt wird. Die Erfindung sieht ausserdem vor, dass der Abwasser-Füllstandmesser V5, der Abwasser-Temperaturmessers T1, der Abwassertankauslass P2, der Frischwasser-Füllstandmesser V3, der Frischwasser-Temperaturmesser T2 und der Frischwassertankeinlass Y5 derart miteinander verschaltet sind, dass die Frischwassermenge im Frischwassertank 14 abhängig ist von der Abwassermenge im Abwassertank 15 und/oder der Abwassertemperatur und/oder der Frischwassertemperatur, und/oder dass die Abwassermenge im Abwassertank 15 abhängig ist von der Frischwassermenge im Frischwassertank 14 und/oder der Frischwassertemperatur und/oder der Abwassertemperatur.

Um das Frischwasser im Frischwassertank 14 zusätzlich vorwärmen zu können, ist im Frischwassertank 14 ein Frischwasser-Heizelement 16 vorgesehen. Dieses Frischwasser-Heizelement 16 wird insbesondere dann aktiviert, wenn das Abwasser das Frischwasser nicht in einem ausreichenden Maße aufheizen kann, beispielsweise weil kein heißes Abwasser im Abwassertank 15 gespeichert ist oder das Abwasser abgekühlt ist. Um zu verhindern, dass kaltes Abwasser im Abwassertank 15 indirekt durch das Aufheizen des Frischwassers im Frischwassertank 14 von dem Frischwasser-Heizelement 16 aufgeheizt wird, sieht die Erfindung außerdem vor, dass bei Aktivieren des Frischwasser-Heizelements 16 die Abwasserpumpe P2 zum Entleeren des Abwassertanks 15 aktiviert wird.

Sämtliche Ventile können als schaltbare Ventile, insbesondere elektrisch betätigbare Magnetventile oder hydraulisch schaltbare Ventile ausgebildet sein.

Zur Vermeidung von Unfällen und Wasserschäden befindet sich eine Wasserauffangschale 22 unterhalb der Kochkammer 3, der Heizkammer 12, der Entwässerungskammer 8, dem Frischwassertank 14 und dem Abwassertank 15. Zum Erfassen von allfällig vorhandenem Wasser in der Wasserauffangschale 22 ist ein Wasserauffangschalen-Füllstandmesser V6 vorgesehen, der mit dem Haupt-Ventil Y9 in der Frischwasserleitung L1 derart verschaltet ist, dass bei Überschreiten eines Grenzwerts der Wassermenge in der Wasserauffangschale 22 die Zufuhr des Frischwassers durch Schliessen des Haupt-Ventils Y9 in der Frischwasserleitung L1 abgeschaltet wird. Um ein Überfluten des Frischwassertanks 14 zu verhindern, ist ausserdem ein Notaus-Frischwasser-Füllstandmesser V4 im Frischwassertank 14 angeordnet. Bei Erreichen eines Grenzwerts des Füllstands im Frischwassertank 14 wird das Haupt-Ventil Y9 in der Frischwasserleitung L1 abgeschaltet.

Ein weiterer sicherheitsrelevanter Vorteil der Erfindung besteht darin, dass sämtliche Abwasser- und Druckauslässe der Kammern in den geschlossenen Abwassertank 15 oder in die Abwasserleitung L12 geführt werden. Entweicht tatsächlich Dampf, da eines der Ventile geöffnet wird, so strömt dieser heiße Dampf zunächst in den Abwassertank 15 und kann dort abkühlen. Die Verbrennungsgefahr wird somit erheblich gemindert.

Um die Vorrichtung bei unerwartetem Stromausfall in einen sicheren Betriebszustand zu bringen, sieht die Erfindung vor, dass die Ventile Y2, Y6 und Y11 als so genannte NO-Ventile ausgebildet sind, die im Ruhezustand offen stehen. Bei Stromausfall entweicht somit ein allfälliger Überdruck aus der Heizkammer 12, der Kochkammer 3 und der Entwässerungskammer 8 sowie allfälliges Abwasser in der Entwässerungskammer 8 gefahrlos in den Abwassertank 15.

## Patentansprüche

1. Vorrichtung zum diskontinuierlichen garenden Zubereiten von portionierten Nahrungsmittelstücken, insbesondere Teigwaren, Nudeln, Reis, Gemüse, Fleisch- und Fischstücken, mit
• einem Vorratsbehälter (1) zur Aufnahme der rohen, zu garenden Nahrungsmittelstücke,
• einer Portioniervorrichtung (2) zur Entnahme einer Portion an rohen Nahrungsmittelstücken aus dem Vorratsbehälter (1),
• einer Kochkammer (3) zum Garen der Portion an rohen Nahrungsmittelstücken, mit
- einem oberen Kochkammereinlass (4), der mittels eines ersten Verschlusses (5) schliessbar ist, zum Beschicken der Kochkammer (3) mit der Portion an rohen Nahrungsmittelstücken, und
- einem unteren Kochkammerauslass (6), der mittels eines zweiten Verschlusses (7) schliessbar ist, zur Ausgabe der Portion an gegarten Nahrungsmittelstücken,
• einer Entwässerungskammer (8), die unterhalb der Kochkammer (3) angeordnet ist, zur Entwässerung der Portion an gegarten Nahrungsmittelstücken, wobei die Kochkammer (3) und die Entwässerungskammer (8) über den verschliessbaren Kochkammerauslass (6) miteinander verbindbar sind, mit
- einem bodenseitig in der Entwässerungskammer (8) angeordneten Abwasserauslass (9) zum Abführen von heißem Abwasser aus der Entwässerungskammer (8) und
- einem unteren Entwässerungskammerauslass (10), der mittels eines dritten Verschlusses (11) schliessbar ist, zur Ausgabe der Portion an gegarten und entwässerten Nahrungsmittelstücken,
• einer Heizkammer (12),
• einem Frischwassertank (14), wobei der Frischwassertank (14) zur insbesondere über eine Frischwasserpumpe (P1) erfolgenden Befüllung mit Frischwasser mit der Heizkammer (12) verbunden ist und wobei die Heizkammer (12) zur Befüllung mit vorgeheiztem Frischwasser mit der Kochkammer (3) verbunden ist, und
• einem Abwassertank (15), mit welchem der Abwasserauslass (9) verbunden ist, zur Aufnahme des heißen Abwassers aus der Entwässerungskammer (8), wobei der Abwassertank (15) und der Frischwassertank (14) derart aneinander angrenzen, dass das Frischwasser im Frischwassertank (14) durch das heiße Abwasser im Abwassertank (15) vorgewärmt wird,
**gekennzeichnet durch**
ein Frischwasser-Heizelement (16) im Frischwassertank (14) zum Vorwärmen des Frischwassers,
wobei
• der Frischwassertank (14) zur Aufnahme von Frischwasser für die Zubereitung mindestens einer Portion an Nahrungsmittelstücken ausgebildet ist und
• das Volumen des Abwassertanks (15) derart dimensioniert ist, dass mindestens das bei der Zubereitung einer Portion an Nahrungsmittelstücken anfallende Abwasser aus der Entwässerungskammer (8) aufnehmbar ist.

2. Vorrichtung nach Anspruch 1,
**dadurch gekennzeichnet, dass**
• das Volumen des Frischwassertanks (14) mindestens dem Volumen an Frischwasser, das für die Zubereitung mindestens einer Portion an Nahrungsmittelstücken ausreicht, entspricht,
• das Volumen des Abwassertanks (15) größer ist als das Volumen des Frischwassertanks (14) und
• insbesondere das Volumen der Heizkammer (12) größer ist als das Volumen der Kochkammer (3).

3. Vorrichtung nach Anspruch 1 oder 2,
**dadurch gekennzeichnet, dass**
• der.Abwassertank (15) den Frischwassertank (14) zumindest in einer Ebene umschliesst, oder umgekehrt.

4. Vorrichtung nach Anspruch 3,
**dadurch gekennzeichnet, dass**
• der Frischwassertank (14) im Abwassertank (15) angeordnet ist und vom Abwassertank (15) im Wesentlichen vollständig umschlossen ist, oder umgekehrt.

5. Vorrichtung nach einem der Ansprüche 1 bis 4, gekenntzeichnet durch
• einen Abwasser-Füllstandmesser (V5) zum Erfassen der Abwassermenge im Abwassertank (15),
• einen schaltbaren Abwassertankauslass, insbesondere eine Abwasserpumpe (P2), zum schaltbaren Auslassen des Abwassers aus dem Abwassertank (15),
• einen Frischwasser-Füllstandmesser (V3) zum Erfassen der Frischwassermenge im Frischwassertank (14),
• einen Frischwassertankeinlass, insbesondere ein Frischwasserventil (Y5), zum schaltbaren Einlassen von Frischwasser in den Frischwassertank (14),
wobei der Abwasser-Füllstandmesser (V5), der Abwassertankauslass (P2), der Frischwasser-Füllstandmesser (V3) und der Frischwassertankeinlass (Y5) derart miteinander verschaltet sind, dass die Frischwassermenge im Frischwassertank (14) abhängig ist von der Abwassermenge im Abwassertank (15).

6. Vorrichtung nach einem der Ansprüche 1 bis 5,
**gekennzeichnet durch**
• einen Abwasser-Temperaturmesser (T1) zum Erfassen der Abwassertemperatur im Abwassertank (15),
• einen schaltbaren Abwassertankauslass, insbesondere eine Abwasserpumpe (P2), zum schaltbaren Auslassen des Abwassers aus dem Abwassertank (15),
• einen Frischwasser-Füllstandmesser (V3) zum Erfassen der Frischwassermenge im Frischwassertank (14),
• ein Frischwassertankeinlass, insbesondere ein Frischwasserventil (Y5), zum schaltbaren Einlassen von Frischwasser in den Frischwassertank (14),
wobei der Abwasser-Temperaturmesser (T1), der Abwassertankauslass (P2), der Frischwasser-Füllstandmesser (V3) und der Frischwassertankeinlass (Y5) derart miteinander verschaltet sind, dass die Frischwassermenge im Frischwassertank (14) und/oder die Abwassermenge im Abwassertank abhängig ist von der Abwassertemperatur im Abwassertank (15).

7. Vorrichtung nach Anspruch 5 oder 6,
**dadurch gekennzeichnet, dass**
• die Frischwassermenge im Frischwassertank mit steigender Abwassermenge und/oder mit steigender Abwassertemperatur steigt.

8. Vorrichtung nach einem der Ansprüche 5 bis 7,
**dadurch gekennzeichnet, dass**
das Frischwasser-Heizelement (16) und der Abwassertankauslass (P2) derart verschaltet sind, dass bei eingeschaltetem Frischwasser-Heizelement (16) die Abwassermenge im Abwassertank (15) reduziert ist, insbesondere im Wesentlichen kein Abwasser im Abwassertank (15) ist.

9. Vorrichtung nach einem der Ansprüche 1 bis 8,
**dadurch gekennzeichnet, dass**
• die Entwässerungskammer (8) - insbesondere in einem oberen Abschnitt - einen Entwässerungskammer-Druckauslass (17) aufweist, der mit dem Abwassertank (15) verbunden ist, zum Ablassen von Druck aus der Entwässerungskammer (8) - insbesondere vor dem Öffnen des dritter Verschlusses (11) - in den Abwassertank (15),
und/oder
• die Heizkammer (12) einen Heizkammer-Druckauslass (18) aufweist, der - insbesondere über ein Ventil (Y11) - mit dem Abwassertank (15) oder einer Abwasserleitung (L12) verbunden ist, zum Ablassen von Druck aus der Heizkammer (12) in den Abwassertank (15) oder in die Abwasserleitung (L12), insbesondere wobei das Ventil (Y11) mit einem den Druck in der Heizkammer (12) erfassenden Drucksensor (V2) derart verschaltet ist, dass der Druck in der Heizkammer (12) begrenzt, insbesondere geregelt wird,
und/oder
• die Kochkammer (3) einen Kochkammer-Druckauslass (19) aufweist, der - insbesondere über ein Ventil (Y2) - mit dem Abwassertank (15) oder einer Abwasserleitung (L12) verbunden ist, zum Ablassen von Druck aus der Kochkammer (3), insbesondere wobei das Ventil (Y2) mit einem den Druck in der Kochkammer (3) erfassenden Drucksensor (V1) derart verschaltet ist, dass der Druck in der Kochkammer (3) begrenzt, insbesondere geregelt wird.

10. Vorrichtung nach einem der Ansprüche 1 bis 9,
**gekennzeichnet durch**
• eine Wasserauffangschale (22) unterhalb der Kochkammer (3), der Heizkammer (12), der Entwässerungskammer (8), dem Frischwassertank (14) und dem Abwassertank (15),
• einen Wasserauffangschalen-Füllstandmesser (V6) zum Erfassen einer Wassermenge in der Wasserauffangschale (22) und
• ein Haupt-Ventil (Y9) in der Zufuhr des Frischwassers, wobei der Wasserauffangschalen-Füllstandmesser (V6) und das Haupt-Ventil (Y9) derart ausgebildet und verschaltet sind, dass bei Überschreiten eines Grenzwerts der Wassermenge in der Wasserauffangschale (22) die Zufuhr des Frischwassers abgeschaltet wird.

11. Vorrichtung nach einem der Ansprüche 1 bis 10,
**dadurch gekennzeichnet, dass**
• in der Entwässerungskammer (8) eine Abschreckdüse (23) zum Abschrecken der Portion an gegarten und entwässerten Nahrungsmittelstücken mit Frischwasser angeordnet ist, wobei die Abschreckdüse (23) über ein Abschreckdüsen-Ventil (Y4) mit einer Frischwasserzufuhr, die dem Frischwassertank (14) vorangeschaltet ist, verbunden ist.

12. Vorrichtung nach einem der Ansprüche 1 bis 11,
**dadurch gekennzeichnet, dass**
• die Heizkammer (12) rings um die Kochkammer (3) angeordnet ist, wobei in der Trennwand zwischen der Heizkammer (12) und der Kochkammer (3) eine Heizeinheit (13) zum Heizen der Kochkammer (3) und der Heizkammer (12) angeordnet ist.

13. Verfahren zum diskontinuierlichen garenden Zubereiten von portionierten Nahrungsmittelstücken, insbesondere Teigwaren, Nudeln, Reis, Gemüse, Fleisch- und Fischstücken, insbesondere unter Verwendung einer Vorrichtung nach einem der Ansprüche 1 bis 12,
mit den Schritten
• Befüllen eines Frischwassertanks (14) mit Frischwasser durch Aktivieren eines schaltbaren Frischwassertankeinlasses (Y5),
• Befüllen einer Heizkammer (12), insbesondere wobei die Heizkammer (12) rings um eine Kochkammer (3) angeordnet ist, mit dem Frischwasser aus dem Frischwassertank (14) und vorwärmen des Frischwassers in der Heizkammer, insbesondere wobei die Kochkammer (3) und die Heizkammer (12) mittels einer Heizeinheit (13), die in der Trennwand zwischen der Heizkammer (12) und der Kochkammer (3) angeordnet ist, beheizt wird,
• Entnahme einer Portion an rohen Nahrungsmittelstücken aus einem Vorratsbehälter (1) und Beschicken der Kochkammer mit der Portion an rohen Nahrungsmittelstücken über einen geöffneten ersten Verschlusses (5) eines oberen Kochkammereinlasses (4) der Kochkämmer ('3) mittels einer Portioniervorrichtung (2), wobei ein unterer Kochkammerauslass (6) mittels eines zweiten Verschlusses (7) geschlossen ist,
• Schliessen des ersten Verschlusses (5) des oberen Kochkammereinlasses (4),
• Befüllen der Kochkammer (3) mit vorgeheiztem Frischwasser aus der Heizkammer (12),
• Warten, bis die Portion an rohen Nahrungsmittelstücken in der Kochkammer (3) gegart ist, insbesondere bei gleichzeitiger Wärmezufuhr mittels der Heizeinheit (13),
• insbesondere Ausgleichen des Drucks zwischen der Kochkammer (3) und einer Entwässerungskammer (8),
• Öffnen des zweiten Verschlusses (7), wobei die Portion an gegarten Nahrungsmittelstücken durch den unteren Kochkammerauslass (6) in eine Entwässerungskammer (8), die unterhalb der Kochkammer (3) angeordnet ist, fällt, wobei ein unterer Entwässerungskammerauslass (10) mittels eines dritten Verschlusses (11) geschlossen ist,
• insbesondere Abschrecken der Portion an gegarten Nahrungsmittelstücken durch Einführen von Frischwasser in die Entwässerungskammer (8),
• Entwässern der Portion an gegarten Nahrungsmittelstücken durch Abführen von heißem Abwasser aus der Entwässerungskammer (8),
• Ausgabe der Portion an gegarten und entwässerten Nahrungsmittelstücken durch Öffnen des dritten Verschlusses (11), wobei die Portion an gegarten und entwässerten Nahrungsmittelstücken durch den unteren Entwässerungskammerauslass (10) fällt, und
• Führen des Abwassers aus der Entwässerungskammer (8) in einen Abwassertank (15), wobei das Frischwasser im Frischwassertank (14) durch das Abwasser im Abwassertank (15), der an den Frischwassertank (14) angrenzt, vorgewärmt wird,
**dadurch gekennzeichnet, dass**
• der Frischwassertank (14) mit einer Menge an Frischwasser, die für die Zubereitung mindestens einer Portion an Nahrungsmittelstücken ausreicht, befüllt wird,
• das Volumen des Abwassertanks (15) derart dimensioniert ist, dass mindestens das bei der Zubereitung einer Portion an Nahrungsmittelstücken anfallende Abwasser aus der Entwässerungskammer (8) im Abwassertank (15) aufgenommen wird, und
• das Frischwasser im Frischwassertank (14) durch ein Frischwasser-Heizelement (16) vorgewärmt wird.

14. Verfahren nach Anspruch 13,
**dadurch gekennzeichnet, dass**
• die Frischwassermenge im Frischwassertank (14) abhängig von der Abwassermenge und/oder der Abwassertemperatur im Abwassertank (15) geregelt oder gesteuert wird, insbesondere wobei die Frischwassermenge im Frischwassertank (14) mit steigender Abwassermenge und/oder mit steigender Abwassertemperatur erhöht wird, und/oder
• in der Entwässerungskammer (8) und/oder in der Kochkammer (3) und/oder in der Heizkammer (12) herrschender Druck in den Abwassertank (15) oder eine Abwasserleitung (L12) abgelassen wird.

15. Verfahren nach Anspruch 13 oder 14,
**dadurch gekennzeichnet, dass**
bei eingeschaltetem Frischwasser-Heizelement (16) die Abwassermenge im Abwassertank (15) reduziert ist, insbesondere im Wesentlichen kein Abwasser im Abwassertank (15) ist.

## Claims

1. Apparatus for cooking portioned food pieces, in particular pasta, noodles, rice, vegetables and pieces of meat and fish, in a discontinuous way, having
• a storage container (1) for accommodating the uncooked items of food to be cooked,
• a portioning apparatus (2) for removing a portion of uncooked food pieces from the storage container (1),
• a cooking chamber (3) for cooking the portion of uncooked food pieces, having
- an upper cooking chamber inlet (4), which can be closed by means of a first closure (5), for charging the cooking chamber (3) with the portion of uncooked food pieces, and
- a lower cooking chamber outlet (6), which can be closed by means of a second closure (7), for dispensing the portion of cooked food pieces,
• a water removal chamber (8), which is arranged beneath the cooking chamber (3), for removing water from the portion of cooked food pieces, it being possible for the cooking chamber (3) and the water removal chamber (8) to be connected to one another via the closable cooking chamber outlet (6), having
- a wastewater outlet (9), which is arranged in the base of the water removal chamber (8), for discharging hot wastewater from the water removal chamber (8) and
- a lower water removal chamber outlet (10), which can be closed by means of a third closure (11), for dispensing the portion of cooked food pieces from which water has been removed,
• a heating chamber (12),
• a fresh water tank (14), with the fresh water tank (14) being connected to the heating chamber (12) in order to fill said heating chamber with fresh water, in particular via a fresh water pump (P1), and with the heating chamber (12) being connected to the cooking chamber (3) in order to fill said cooking chamber with preheated fresh water, and
• a wastewater tank (15), to which the wastewater outlet (9) is connected, for accommodating the hot wastewater from the water removal chamber (8), with the wastewater tank (15) and the fresh water tank (14) adjoining one another in such a way that the fresh water in the fresh water tank (14) is preheated by the hot wastewater in the wastewater tank (15),
**characterized by**
a fresh water heating element (16) in the fresh water tank (14) for preheating the fresh water, with
• the fresh water tank (14) being formed for accommodating fresh water for preparing at least one portion of food pieces, and
• the volume of the wastewater tank (15) being of such a magnitude that at least the wastewater which is produced during the preparation of a portion of food pieces can be removed from the water removal chamber (8).

2. Apparatus according to Claim 1,
**characterized in that**
• the volume of the fresh water tank (14) corresponds at least to the volume of fresh water which is sufficient for preparing at least one portion of food pieces,
• the volume of the wastewater tank (15) is greater than the volume of the fresh water tank (14) and
• in particular, the volume of the heating chamber (12) is greater than the volume of the cooking chamber (3).

3. Apparatus according to Claim 1 or 2,
**characterized in that**
• the wastewater tank (15) surrounds the fresh water tank (14) at least in one plane, or vice versa.

4. Apparatus according to Claim 3,
**characterized in that**
• the fresh water tank (14) is arranged in the wastewater tank (15) and is substantially completely surrounded by the wastewater tank (15), or vice versa.

5. Apparatus according to any one of Claims 1 to 4,
**characterized by**
• a wastewater filling level measuring device (V5) for detecting the quantity of wastewater in the wastewater tank (15),
• a switchable wastewater tank outlet, in particular a wastewater pump (P2), for switchably expelling the wastewater from the wastewater tank (15),
• a fresh water filling level measuring device (V3) for detecting the quantity of fresh water in the fresh water tank (14),
• a fresh water tank inlet, in particular a fresh water valve (Y5), for switchably admitting fresh water into the fresh water tank (14),
with the wastewater filling level measuring device (V5), the wastewater tank outlet (P2), the fresh water filling level measuring device (V3) and the fresh water tank inlet (Y5) being interconnected in such a way that the quantity of fresh water in the fresh water tank (14) is dependent on the quantity of wastewater in the wastewater tank (15).

6. Apparatus according to any one of Claims 1 to 5,
**characterized by**
• a wastewater temperature measuring device (T1) for detecting the wastewater temperature in the wastewater tank (15),
• a switchable wastewater tank outlet, in particular a wastewater pump (P2), for switchably expelling the wastewater from the wastewater tank (15),
• a fresh water filling level measuring device (V3) for detecting the quantity of fresh water in the fresh water tank (14),
• a fresh water tank inlet, in particular a fresh water valve (Y5), for switchably admitting fresh water into the fresh water tank (14),
with the wastewater temperature measuring device (T1), the wastewater tank outlet (P2), the fresh water filling level measuring device (V3) and the fresh water tank inlet (Y5) being interconnected in such a way that the quantity of fresh water in the fresh water tank (14) and/or the quantity of wastewater in the wastewater tank is dependent on the wastewater temperature in the wastewater tank (15).

7. Apparatus according to Claim 5 or 6,
**characterized in that**
• the quantity of fresh water in the fresh water tank increases as the quantity of wastewater increases and/or as the wastewater temperature increases.

8. Apparatus according to any one of Claims 5 to 7,
**characterized in that**
the fresh water heating element (16) and the wastewater tank outlet (P2) are interconnected in such a way that the quantity of wastewater in the wastewater tank (15) is reduced, in particular there is essentially no wastewater in the wastewater tank (15), when the fresh water heating element (16) is switched on.

9. Apparatus according to any one of Claims 1 to 8,
**characterized in that**
• the water removal chamber (8) has a water removal chamber pressure outlet (17) - in particular in an upper section - this water removal chamber pressure outlet being connected to the wastewater tank (15) in order to expel pressure from the water removal chamber (8) into the wastewater tank (15) - in particular before the third closure (11) is opened,
and/or
• the heating chamber (12) has a heating chamber pressure outlet (18) which is connected to the wastewater tank (15) or a wastewater line (L12) - in particular via a valve (Y11) - in order to expel pressure from the heating chamber (12) into the wastewater tank (15) or into the wastewater line (L12), in particular with the valve (Y11) being interconnected to a pressure sensor (V2), which detects the pressure in the heating chamber (12), in such a way that the pressure in the heating chamber (12) is limited, in particular regulated,
and/or
• the cooking chamber (3) has a cooking chamber pressure outlet (19) which is connected to the wastewater tank (15) or a wastewater line (L12) - in particular via a valve (Y2) - in order to expel pressure from the cooking chamber (3), in particular with the valve (Y2) being interconnected to a pressure sensor (V1), which detects the pressure in the cooking chamber (3), in such a way that the pressure in the cooking chamber (3) is limited, in particular regulated.

10. Apparatus according to any one of Claims 1 to 9,
**characterized by**
• a water collection tray (22) beneath the cooking chamber (3), the heating chamber (12), the water removal chamber (8), the fresh water tank (14) and the wastewater tank (15),
• a water collection tray filling level measuring device (V6) for detecting a quantity of water in the water collection tray (22), and
• a main valve (Y9) in the supply means for the fresh water, with the water collection tray filling level measuring device (V6) and the main valve (Y9) being formed and interconnected in such a way that the supply means for fresh water is switched off when a limit value for the quantity of water in the water collection tray (22) is exceeded.

11. Apparatus according to any one of Claims 1 to 10,
**characterized in that**
• a quenching nozzle (23) for quenching the portion of cooked food pieces, from which water has been removed, with fresh water is arranged in the water removal chamber (8), with the quenching nozzle (23) being connected to a fresh water supply means, which is connected upstream of the fresh water tank (14), via a quenching nozzle valve (Y4).

12. Apparatus according to any one of Claims 1 to 11,
**characterized in that**
• the heating chamber (12) is arranged all around the cooking chamber (3), with a heating unit (13) for heating the cooking chamber (3) and the heating chamber (12) being arranged in the partition wall between the heating chamber (12) and the cooking chamber (3).

13. Method for cooking portioned food pieces, in particular pasta, noodles, rice, vegetables and pieces of meat and fish, in a discontinuous way, in particular using an apparatus according to any one of Claims 1 to 12, comprising the steps of
• filling a fresh water tank (14) with fresh water by activating a switchable fresh water tank inlet (Y5).
• filling a heating chamber (12), in particular with the heating chamber (12) being arranged all around a cooking chamber (3), with the fresh water from the fresh water tank (14) and preheating the fresh water in the heating chamber, in particular with the cooking chamber (3) and the heating chamber (12) being heated by means of a heating unit (13) which is arranged in the partition wall between the heating chamber (12) and the cooking chamber (3),
• removing a portion of uncooked food pieces from a storage container (1) and charging the cooking chamber with the portion of uncooked food pieces via an open first closure (5) of an upper cooking chamber inlet (4) of the cooking chamber (3) by means of a portioning apparatus (2), with a lower cooking chamber outlet (6) being closed by means of a second closure (7),
• closing the first closure (5) of the upper cooking chamber inlet (4),
• filling the cooking chamber (3) with preheated fresh water from the heating chamber (12),
• waiting until the portion of uncooked food pieces in the cooking chamber (3) is cooked, in particular while at the same time supplying heat by means of the heating unit (13),
• in particular compensating the pressure between the cooking chamber (3) and a water removal chamber (8),
• opening the second closure (7), with the portion of cooked food pieces falling through the lower cooking chamber outlet (6) into a water removal chamber (8) which is arranged beneath the cooking chamber (3), with a lower water removal chamber outlet (10) being closed by means of a third closure (11),
• in particular quenching the portion of cooked food pieces by introducing fresh water into the water removal chamber (8),
• removing water from the portion of cooked food pieces by discharging hot wastewater from the water removal chamber (8),
• dispensing the portion of cooked food pieces, from which water has been removed, by opening the third closure (11), with the portion of cooked food pieces, from which water has been removed, falling through the lower water removal chamber outlet (10), and
• routing the wastewater from the water removal chamber (8) into a wastewater tank (15), with the fresh water in the fresh water tank (14) being preheated by the wastewater in the wastewater tank (15) which adjoins the fresh water tank (14),
**characterized in that**
• the fresh water tank (14) is filled with a quantity of fresh water, which is sufficient for preparing at least one portion of food pieces,
• the volume of the wastewater tank (15) is of such a magnitude that at least the wastewater, which is produced during the preparation of a portion of food pieces, from the water removal chamber (8) is accommodated in the wastewater tank (15), and
• the fresh water in the fresh water tank (14) is preheated by a fresh water heating element (16).

14. Method according to Claim 13,
**characterized in that**
• the quantity of fresh water in the fresh water tank (14) is regulated or controlled as a function of the quantity of wastewater and/or the wastewater temperature in the wastewater tank (15), in particular with the quantity of fresh water in the fresh water tank (14) being increased as the quantity of wastewater increases and/or as the wastewater temperature increases, and/or
• pressure prevailing in the water removal chamber (8) and/or in the cooking chamber (3) and/or in the heating chamber (12) is released into the wastewater tank (15) or a wastewater line (L12)

15. Method according to Claim 13 or 14,
**characterized in that**
the quantity of wastewater in the wastewater tank (15) is reduced, in particular there is essentially no wastewater in the wastewater tank (15), when the fresh water heating element (16) is switched on.

## Revendications

1. Dispositif de préparation de cuisson discontinue de pièces d'aliments en portions, en particulier de pâtes alimentaires, nouilles, riz, légumes, morceaux de viande et de poisson, avec :
• un réservoir de stockage (1) pour recevoir les pièces d'aliments brutes, à cuire,
• un dispositif de portionnement (2), pour prélever une portion de pièces d'aliments brutes à partir du réservoir de stockage (1),
• une chambre de cuisson (3) pour cuire la portion de pièces d'aliments brutes, avec :
- une entrée de chambre de cuisson (4) supérieure, susceptible d'être fermée au moyen d'un premier obturateur (5), pour charger la chambre de cuisson (3) avec la portion de pièces d'aliments brutes, et
- une sortie de chambre de cuisson (6) inférieure, susceptible d'être fermée au moyen d'un deuxième obturateur (7), pour délivrer la portion de pièces d'aliments cuites,
• une chambre d'égouttage (8), disposée au-dessous de la chambre de cuisson (3), pour égoutter la portion de pièces d'aliments cuites, la chambre de cuisson (3) et la chambre d'égouttage (8) étant susceptibles d'être reliées ensemble par l'intermédiaire de la sortie de chambre de cuisson (6) susceptible d'être fermée, avec
- une évacuation d'aux usées (9), disposée côté fond dans la chambre d'égouttage (8), pour évacuer les eaux chaudes usées hors de la chambre d'égouttage (8), et
- une sortie de chambre d'égouttage (10) inférieure, susceptible d'être fermée au moyen d'un troisième obturateur (11), pour délivrer la portion de pièces d'aliments cuites et séchées,
• une chambre de chauffage (12),
• un réservoir à eau neuve (14), le réservoir à eau neuve (14) étant relié à la chambre de chauffage (12), pour assurer le remplissage en eau neuve, s'effectuant en particulier par l'intermédiaire d'une pompe à eau neuve (P1), et la chambre de chauffage (12) étant reliée à la chambre de cuisson (3), pour assurer le remplissage avex de l'eau neuve préchauffée, et
• un réservoir à eaux usées (15), auquel l'évacuation d'aux usées (9) est reliée, pour recevoir les eaux usées chaudes provenant de la chambre d'égouttage (8), le réservoir à eaux usées (15) et le réservoir à eau neuve (14) étant limitrophes l'un à l'autre, de manière que l'eau neuve présente dans le réservoir à eau neuve (14) soit préchauffée par les eaux usées chaudes présentes dans le réservoir à eaux usées (15),
**caractérisé par**
un élément de chauffage d'eau neuve (16), placé dans le réservoir à eau neuve (14) pour préchauffer l'eau neuve,
où
• le réservoir à eau neuve (14) est réalisé pour recevoir de l'eau neuve pour la préparation d'au moins une portion de pièces d'aliments, et
• le volume du réservoir à eaux usées (15) est dimensionné, de manière qu'au moins les eaux usées, produites lors de la préparation d'une portion de pièces d'aliments et provenant de la chambre d'égouttage (8), puissent être contenues.

2. Dispositif selon la revendication 1,
**caractérisé en ce que**
• le volume du réservoir à eau neuve (14) correspond au moins au volume d'eau neuve, suffisant pour la préparation d'au moins une portion de pièces d'aliments,
• le volume du réservoir à eaux usées (15) est plus gros que le volume du réservoir à eau neuve (14), et
• en particulier le volume de la chambre de chauffage (12) est plus gros que le volume de la chambre de cuisson (3).

3. Dispositif selon la revendication 1 ou 2,
**caractérisé en ce que**
le réservoir à eaux usées (15) entoure le réservoir à eau neuve (14) au moins dans un plan, ou inversement.

4. Dispositif selon la revendication 3,
**caractérisé en ce que**
• le réservoir à eau neuve (14) est disposé dans le réservoir à eaux usées (15) et est pratiquement complètement entouré par le réservoir à eaux usées (15), ou inversement.

5. Dispositif selon l'une des revendications 1 à 4,
**caractérisé par**
• un dispositif de mesure de niveau de remplissage (V5), pour appréhender la quantité d'eaux usées présente dans le réservoir à eaux usées (15),
• une évacuation de réservoir à eaux usées susceptible d'être commutée, en particulier une pompe à eaux usées (P2), pour évacuer, de manière susceptible d'être commutée, les eaux usées hors du réservoir à eaux usées (15),
• un dispositif de mesure de niveau de remplissage en eau neuve (V3), pour appréhender la quantité d'eau neuve présente dans le réservoir à eau neuve (14),
• une entrée de réservoir à eau neuve, en particulier une soupape à eau neuve (Y5), pour l'admission, susceptible d'être commutée, d'eau neuve dans le réservoir à eau neuve (14),
où le dispositif de mesure de niveau de remplissage (V5), l'évacuation de réservoir à eaux usées (P2), le dispositif de mesure de niveau de remplissage en eau neuve (V3) et l'entrée de réservoir à eau neuve (Y5) sont branchés ensemble, de manière que la quantité d'eau neuve présente dans le réservoir à eau neuve (14) soit fonction de la quantité d'eaux usées présente dans le réservoir à eaux usées (15).

6. Dispositif selon l'une des revendications 1 à 5,
**caractérisé par**
• un dispositif de mesure de température d'eaux usées (T1), pour appréhender la température d'eau usée dans le réservoir à eaux usées (15),
• une évacuation de réservoir à eaux usées susceptible d'être commutée, en particulier une pompe à eaux usées (P2), pour évacuer, de manière susceptible d'être commutée, les eaux usées hors du réservoir à eaux usées (15),
• un dispositif de mesure de niveau de remplissage en eau neuve (V3), pour appréhender la quantité d'eau neuve présente dans le réservoir à eau neuve (14),
• une entrée de réservoir à eau neuve, en particulier une soupape à eau neuve (Y5), pour l'admission, susceptible d'être commutée, d'eau neuve dans le réservoir à eau neuve (14),
où le dispositif de mesure de température d'eaux usées (T1), l'évacuation de réservoir à eaux usées (P2), le dispositif de mesure de niveau de remplissage en eau neuve (V3) et l'entrée de réservoir à eau neuve (Y5) sont branchés ensemble, de manière que la quantité d'eau neuve présente dans le réservoir à eau neuve (14) et/ou la quantité d'eaux usées présente dans le réservoir à eaux usées soi(en)t fonction de la température d'eaux usées présente dans le réservoir à eaux usées (15).

7. Dispositif selon la revendication 5 ou 6,
**caractérisé en ce que**
• la quantité d'eau neuve présente dans le réservoir à eau neuve augmente lorsque la quantité d'eaux usées augmente et/ou que la température d'eaux usées augmente.

8. Dispositif selon l'une des revendications 5 à 7,
**caractérisé en ce que**
l'élément chauffant d'eau neuve (16) et l'évacuation de réservoir à eaux usées (P2) sont branchés ensemble, de manière que, lorsque l'élément chauffant d'eau neuve (16) est mis en service, la quantité d'eaux usées présente dans le réservoir à eaux usées (15) soit réduite, en particulier que pratiquement pas d'eau usée se trouve dans le réservoir à eaux usées (15).

9. Dispositif selon l'une des revendications 1 à 8,
**caractérisé en ce que**
• la chambre d'égouttage (8) - en particulier dans un tronçon supérieur - présente une décharge de pression de chambre d'égouttage (17), reliée au réservoir à eaux usées (15), pour la décharge de pression à partir de la chambre d'égouttage (8) - en particulier avant l'ouverture du troisième obturateur (11) - dans le réservoir à eaux usées (15),
et/ou
• la chambre de chauffage (12) présente une décharge de pression de chambre de chauffage (18), reliée - en particulier par l'intermédiaire d'une soupape (Y11) - au réservoir à eaux usées (15), ou reliée à une conduite à eaux usées (L12), pour la décharge de pression hors de la chambre de chauffage (12), dans le réservoir à eaux usées (15) ou dans la conduite à eaux usées (L12), en particulier la soupape (Y11) étant branchée-avec un capteur de pression (V2) appréhendant la pression régnant dans la chambre de chauffage (12), de manière que la pression dans la chambre de chauffage (12) soit limitée, en particulier régulée,
et/ou
• la chambre de cuisson (3) présente une décharge de pression de chambre de cuisson (19), reliée - en particulier par l'intermédiaire d'une soupape (Y2) - au réservoir à eaux usées (15), ou reliée à une conduite à eaux usées (L12), pour la décharge de pression hors de la chambre de cuisson (3), en particulier la soupape (Y2) étant branchée avec un capteur de pression (V1) appréhendant la pression régnant dans la chambre de cuisson (3), de manière que la pression régnant dans la chambre de cuisson (3) soit limitée, en particulier régulée.

10. Dispositif selon l'une des revendications 1 à 9,
**caractérisé par**
• une coque de captage d'eau (22), au dessous de la chambre de cuisson (3), de la chambre de chauffage (12), de la chambre d'égouttage (8), du réservoir à eau neuve (14) et du réservoir à eaux usées (15),
• un dispositif de mesure de niveau de remplissage de coque de captage d'eau (V6), pour appréhender une quantité d'eau dans la coque de captage d'eau (22), et
• une soupape principale (Y9), dans l'amenée de l'eau neuve,
le dispositif de mesure de niveau de remplissage de coque de captage d'eau (V6) et la soupape principale (Y9) étant réalisés et branchés de manière que, en cas de dépassement d'une valeur limite de la quantité d'eau dans la coque de captage d'eau (22), l'alimentation en eau neuve soit mise hors service.

11. Dispositif selon l'une des revendications 1 à 10,
**caractérisé en ce qu'**
• une buse de refroidissement brusque (23), pour refroidir brusquement avec de l'eau neuve la portion de pièces d'aliments cuites et égouttées, est disposée dans la chambre d'égouttage (8), la buse de refroidissement brusque (23) étant reliée, par une soupape de buse de refroidissement brusque (Y4), à une amenée d'eau neuve, branchée en amont du réservoir à eau neuve (14).

12. Dispositif selon l'une des revendications 1 à 11,
**caractérisé en ce que**
• la chambre de chauffage (12) est disposée tout autour de la chambre de cuisson (3), une unité chauffante (13), pour le chauffage de la chambre de cuisson (3) et de la chambre de chauffage (12), étant disposée dans la paroi de séparation entre la chambre de chauffage (12) et la chambre de cuisson (3).

13. Procédé de préparation de cuisson discontinue de pièces d'aliments en portions, en particulier de pâtes alimentaires, nouilles, riz, légumes, morceaux de viande et de poisson, en particulier faisant utilisation d'un dispositif selon l'une des revendications 1 à 12, avec les étapes consistant à :
• remplir un réservoir à eau neuve (14) avec de l'eau neuve, par activation d'une entrée de réservoir à eau neuve (Y5) susceptible d'être commutée,
• remplir une chambre de chauffage (12), en particulier la chambre de chauffage (12) étant disposée tout autour d'une chambre de cuisson (3), en utilisant l'eau neuve provenant du réservoir à eau neuve (14) et préchauffage de l'eau neuve présente dans la chambre de chauffage, en particulier la chambre de cuisson (3) et la chambre de chauffage (12) étant chauffées au moyen d'une unité chauffante (13), disposée dans la paroi de séparation entre la chambre de chauffage (12) et la chambre de cuisson (3),
• prélever d'un réservoir de stockage (1) une portion de pièces d'aliments brutes et charger la chambre de cuisson avec la portion de pièces d'aliments brutes, en passant par un premier obturateur (5) ouvert d'une entrée de chambre de cuisson (4) supérieure de la chambre de cuisson (3), au moyen d'un dispositif de portionnement (2), une sortie de chambre de cuisson (6) inférieure étant fermée au moyen d'un deuxième obturateur (7),
• fermeture du premier obturateur (5) de l'entrée de chambre de cuisson (4) supérieure,
• remplissage de la chambre de cuisson (3) avec de l'eau neuve préchauffée provenant de la chambre de chauffage (12),
• attente, jusqu'à ce que la portion de pièces d'aliments brutes se trouvant dans la chambre de cuisson (3) soit cuite, en particulier avec apport simultané de chaleur au moyen de l'unité chauffante (13),
• en particulier équilibrage de la pression, entre la chambre de cuisson (3) et une chambre d'égouttage (8),
• ouverture du deuxième obturateur (7), la portion de pièces d'aliments cuites tombant, en passant par la sortie de chambre de cuisson (6) inférieure, dans une chambre d'égouttage (8) disposée sous la chambre de cuisson (3), une sortie de chambre d'égouttage (10) inférieure étant fermée avec un troisième obturateur (11),
• en particulier refroidissement brusque de la portion de pièces d'aliments cuites, par introduction d'eau neuve dans la chambre d'égouttage (8),
• égouttage de la portion de pièces d'aliments cuites, par évacuation d'eaux usées chaudes hors de la chambre d'égouttage (8),
• distribution de la portion de pièces d'aliments cuites et égouttées par ouverture du troisième obturateur (11), la portion de pièces d'aliments cuites et égouttées tombant à travers la sortie de chambre d'égouttage (10) inférieure, et
• guidage des eaux usées provenant de la chambre d'égouttage (8), dans un réservoir à eaux usées (15), l'eau neuve présente dans le réservoir à eau neuve (14) étant préchauffée au moyen de l'eau usée présente dans le réservoir à eaux usées (15), limitrophe au réservoir à eau neuve (14),
**caractérisé par**
• le réservoir à eau neuve (14) est rempli d'une quantité d'eau neuve suffisant à la préparation d'au moins une portion de pièces d'aliments,
• le volume du réservoir à eaux usées (15) est dimensionné de manière qu'au moins les eaux usées, produites lors de la préparation d'une une portion de pièces d'aliments, provenant de la chambre d'égouttage (8), soient captées dans le réservoir à eaux usées (15), et
• l'eau neuve présente dans le réservoir à eau neuve (14) est préchauffée par un élément chauffant d'eau neuve (16).

14. Procédé selon la revendication 13,
**caractérisé en ce que**
• la quantité d'eau neuve présente dans le réservoir à eau neuve (14) est régulée ou commandée en fonction de la quantité d'eaux usées et/ou de la température d'eau usée dans le réservoir à eaux usées (15), en particulier la quantité d'eau neuve présente dans le réservoir à eau neuve (14) est augmentée lorsque la quantité d'eaux usées augmente et/ou que la température d'eau usée augmente et/ou
• la pression régnant dans la chambre d'égouttage (8) et/ou dans la chambre de cuisson (3) et/ou dans la chambre de chauffage (12) est déchargée dans le réservoir à eaux usées (15) ou une conduite à eaux usées (L12).

15. Procédé selon la revendication 13 ou 14,
**caractérisé en ce que**,
lorsque l'élément chauffant d'eau neuve (16) est mis en service, la quantité d'eaux usées dans le réservoir à eaux usées (15) est réduite, en particulier pratiquement aucune eau usée ne se trouve dans le réservoir à eaux usées (15).
